# EUROPÄISCHE PATENTANMELDUNG

(11) **EP 4 620 609 A1**
(43) Veröffentlichungstag der Anmeldung: **24.09.2025**
(21) Anmeldenummer: 25162615.6
(22) Anmeldetag: 10.03.2025
(51) Int. Cl.: B23K 26/08, B23K 26/12, B23K 26/24, B23K 15/06, B23K 101/18

(54) **LASER-SCHWEISSVORRICHTUNG**

(30) Priorität: 18.03.2024 DE 102024107627
(71) Anmelder: LaVa-X GmbH, 52134 Herzogenrath (DE)
(72) Erfinder: Gerhards, Dr. Benjamin, 52072 Aachen (DE); Gerhards, Benedikt, 52064 Aachen (DE); Stockem, Pascal, 52134 Herzogenrath (DE); Konkel, Mathis, 52064 Aachen (DE); Meyer, Stefan, 6462 HZ Kerkrade (NL)
(74) Vertreter: Müller, Thomas

(57) **Zusammenfassung**

Die vorliegende Erfindung betrifft unter anderem eine Laser-Schweißvorrichtung (10), welche für das Schweißen von Werkstücken (90,91) im Unterdruck, vorzugsweise im Vakuum, bereitgestellt ist, mit einer Lasereinrichtung (11), welche konfiguriert ist zur Erzeugung und Einkopplung eines Bearbeitungslaserstrahls (13) in eine Schweißzone (17) der Laser-Schweißvorrichtung (10), mit einer ersten Prozesskammer (30), die in Strahlrichtung (13a) des Bearbeitungslaserstrahls (13) insbesondere vor der Schweißzone (17) bereitgestellt ist, aufweisend einen ersten, der Lasereinrichtung (11) zugewandten Prozesskammerabschluss (31), einen zweiten, der Schweißzone (17) zugewandten Prozesskammerabschluss (32), in dem insbesondere eine Austrittsöffnung (32a) für den Bearbeitungslaserstrahl (13) in die Schweißzone (17) ausgebildet ist, sowie einen sich zwischen dem ersten (31) und zweiten (32) Prozesskammerabschluss erstreckenden seitlichen dritten Prozesskammerabschluss (33), wobei die Lasereinrichtung (11) relativ zur Schweißzone (17) in einer definierten Schweißrichtung (18) beweglich ist. Damit ein Laserschweißen im Unterdruck, insbesondere im Vakuum, auch für große Werkstücke möglich ist, ist die Laser-Schweißvorrichtung (10) dadurch gekennzeichnet, dass wenigstens eine erste Spaltabdeckeinrichtung (50) bereitgestellt ist, welche konfiguriert ist zum Abdecken eines Spalts (92) zwischen den zu verschweißenden Werkstücken (90,91) und/oder eines Spalts (36) in der ersten Prozesskammer (30), dass die erste Spaltabdeckeinrichtung (50) oberhalb der Schweißzone (17) bereitgestellt ist, dass die erste Spaltabdeckeinrichtung (50) ein sich in seiner Ausrichtung in Bezug auf die Schweißrichtung (18) zumindest teilweise veränderliches erstes Spaltabdeckelement (51) aufweist, dass die erste Spaltabdeckeinrichtung (50) mit der Lasereinrichtung (11) oder der ersten Prozesskammer (30) zusammenwirkt und dass die erste Spaltabdeckeinrichtung (50) in Schweißrichtung (18) vor der Lasereinrichtung (11) oder vor der ersten Prozesskammer (30) bereitgestellt ist.

## Beschreibung

Die vorliegende Erfindung betrifft zunächst Laser-Schweißvorrichtung gemäß dem Oberbegriff von Patentanspruch 1. Weiterhin betrifft die Erfindung auch Verfahren zum Laserschweißen von Werkstücken mittels einer solchen Laser-Schweißvorrichtung.

Die vorliegende Erfindung ist auf dem technischen Gebiet des Laserschweißens im Unterdruck, insbesondere im Vakuum, angesiedelt. Das Laserschweißen im Vakuum ist eine Verfahrenskombination der etablierten Fügetechniken Laserschweißen und Elektronenstrahlschweißen.

Beim Laserschweißen wird ein durch eine Lasereinrichtung erzeugter Bearbeitungslaserstrahl mit Hilfe einer Fokussieroptik auf einen kleinen Fleck gebündelt. Da die Energiedichte des Laserlichts sehr hoch ist, wird das zu schweißende Material schnell geschmolzen und teilweise verdampft und es entsteht eine Schweißnaht. Das Laserschweißen findet gewöhnlich bei Atmosphärendruck statt.

Beim Elektronenstrahlschweißen erfolgt die Strahlerzeugung in der sogenannten Elektronenstrahlkanone durch Erwärmung einer Glühkathode und Anlegen einer Beschleunigungsspannung. Die Glühkathode ist bei den gängigen Varianten der Elektronenstrahlerzeuger ein Verschleißteil und muss, je nachdem welcher Werkstoff geschweißt wird, nach wenigen Stunden ausgetauscht werden. Einbaufehler, Verschmutzungen oder sonstige Änderungen dieser filigranen Komponente resultieren sofort in einer Veränderung der Strahleigenschaften und damit der Schweißnahtqualität. Die Strahlformung und -fokussierung erfolgt durch magnetische Spulen. Beim Elektronenstrahlschweißen ist verfahrensbedingt ein Hochvakuum notwendig. Denn eine Kollision der Elektronen mit den Luftmolekülen führt zu einer Aufweitung des Strahls und damit zum Absinken der Intensität am Werkstück.

Seit geraumer Zeit hat sich erfolgreich das Laserschweißen im Vakuum entwickelt, mit zunehmend neuen und sich stetig erweiternden Anwendungsbereichen. Das Laserschweißen im Vakuum beziehungsweise Laserstrahlschweißen im Vakuum ist eine Verfahrensmodifikation des Laserschweißens beziehungsweise Laserstrahlschweißens. Es kombiniert die Vakuumtechnik, die normalerweise beim Elektronenstrahlschweißen zum Einsatz kommt, mit der etablierten Fügetechnik des Laserschweißens. Bei ausreichender Intensität wird am Auftreffpunkt die Schmelztemperatur erreicht und es bildet sich ein kleines Schmelzbad aus. Wird die Intensität, die der Quotient aus Strahlleistung und Spotdurchmesser am Werkstück ist, über eine werkstoffabhängige Schwellenintensität gesteigert, wird am Auftreffpunkt die Siedetemperatur überschritten und das Material verdampft. Der Dampfdruck formt das Schmelzbad, wodurch sich in die Tiefe eine Dampfkapillare, auch Keyhole genannt, ausbildet. Der Durchmesser der Kapillare entspricht dabei in erster Näherung dem Spotdurchmesser. Durch eine Relativbewegung zwischen Strahl und Werkstück entsteht die Schweißnaht.

Durch eine dadurch realisierbare Reduzierung der Siedetemperatur ist weniger Energie notwendig, um das zu bearbeitende Material, üblicherweise Metall, zu verdampfen. Während die Größe der Dampfkapillare maßgeblich vom Strahldurchmesser bestimmt wird, führt eine Temperaturverringerung in der Dampfkapillare auch zu einer Verkleinerung des umgebenden Schmelzbades. Es entsteht ein stabiles Keyholeverhalten, was die Spritzer- und Porenneigung deutlich reduziert. Neben der Qualitätssteigerung der Laserschweißnaht führt das Laserschweißen im Vakuum weiter zu einem signifikant reduzierten Wärmeeintrag, bei gleicher Einschweißtiefe. Dieser Effekt ist besonders bei temperatursensiblen oder heißrissanfälligen Werkstoffen, oder wenn besonders verzugsarm geschweißt werden soll, von großem Nutzen.

Während beim Elektronenstrahlschweißen verfahrensbedingt ein Hochvakuum werkstoffabhängig von 10⁻² - 10⁻⁵ mbar in der Prozesskammer und sogar mindestens 10⁻⁶ mbar im Strahlerzeuger notwendig ist, reicht beim Laserstrahlschweißen im Vakuum, je nach Werkstoff, ein Druck von 10-100 mbar aus, um die gleichen Prozessvorteile wie beim Elektronenstrahlschweißen zu erzielen. Dadurch reduzieren sich die Anforderungen an den Pumpstand, da keine Turbomolekular- und Diffusionspumpen notwendig sind, auf einstufige Vorpumpen.

Das Laserschweißen im Vakuum wird in der Regel in dafür vorgesehenen Prozesskammern ausgeführt. Beispielsweise kann in stationären Prozesskammern geschweißt werden. Hier werden die zu schweißenden Werkstücke in die Prozesskammer eingebracht und sind allseitig von der Prozesskammer umgeben. Anschließend erfolgt der Schweißvorgang innerhalb der Prozesskammer.

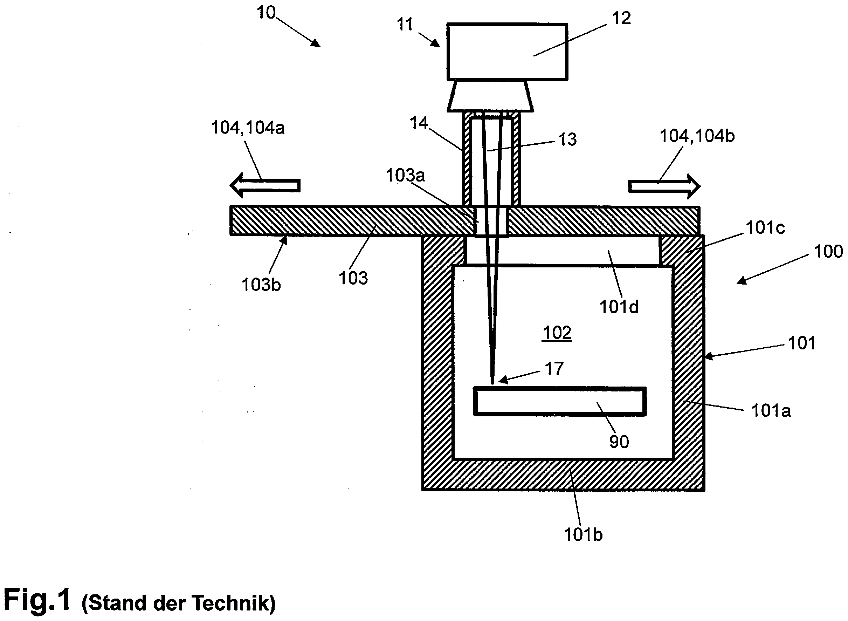

Eine derartige Lösung ist beispielsweise in der DE 10 2006 034 291 A1 offenbart. Diese stellt den Ausgangspunkt der vorliegenden Erfindung dar. Sie ist in Figur 1 dargestellt und in der Figurenbeschreibung erläutert. In einer Prozesskammer, wie sie in der DE 10 2006 034 291 A1 offenbart ist, und grundsätzlich auch in anderen stationären Prozesskammern, ist allerdings nicht jede Art von Schweißprozessen möglich.

Alle zuvor beschriebenen Lösungen zum Stand der Technik, die eine stationäre Prozesskammer aufweisen, und insbesondere die in der DE 10 2006 034 291 A1 beschriebene Lösung, eignen sich beispielsweise nicht für das Schweißen großer Werkstücke. Denn die Werkstücke müssen zur Bearbeitung in ihrer Gänze innerhalb der Prozesskammer positionieret werden. Beim Schweißen großer Werkstücke muss die Prozesskammer deshalb ausreichend groß dimensioniert werden. Dafür ist nicht nur ein hoher Platzbedarf erforderlich. Zudem muss die Prozesskammer während des Schweißvorgangs evakuiert werden und in einem evakuierten Zustand gehalten werden. Entsprechend großvolumige Prozesskammern sind auch deshalb von Nachteil, da ein sehr großes Volumen evakuiert werden muss. Beispielsweise auf dem Gebiet des Schweißens von Autokarosserien ist eine bekannte stationäre Vakuum-Prozesskammer deshalb nicht geeignet. Gleiches gilt für andere Werkstücke, wie beispielsweise Dickbleche, die entsprechend große Abmessungen haben. Eine wie in der DE 10 2006 034 291 A1 offenbarte Lösung hätte zudem den Nachteil, dass das Deckelelement, welches sich für die geforderte Bewegung weit über die Prozesskammerwand hinaus erstrecken müsste, nochmals um einiges größer sein müsste als die Prozesskammer. Denn zu jedem Zeitpunkt müsste sichergestellt sein, dass die Prozesskammer über das Deckelelement hermetisch verschlossen ist, egal, an welcher Position sich die Durchgangsöffnung mit der zugeordneten Lasereinrichtung befindet. Der für eine derartige Bearbeitungsvorrichtung erforderliche Platz müsste deshalb unverhältnismäßig groß sein.

In der DE 10 2021 104 512 A1 wird ein Verfahren zum Verschweißen mit einer mobilen Unterdruckkammer beschrieben. Die Unterdruckkammer wird zur Durchführung des Schweißvorgangs in Schweißrichtung über die zu verschweißenden Bauteile geführt. Das Problem, das mit der DE 10 2021 104 512 A1 gelöst werden soll, sind Leckagen, die aufgrund eines Fügespalts zwischen den Bauteilen entstehen können und den Schweißprozess destabilisieren, was insbesondere zu einer verstärkten Spritzerneigung führt. Dazu weist die Schweißvorrichtung eine erste Unterdruckkammer auf, in der der eigentliche Schweißvorgang stattfindet. Daran angrenzend befindet sich eine zweite Unterdruckkammer, die über einen eventuellen Fügespalt zwischen den Bauteilen in Verbindung mit der ersten Unterdruckkammer steht. In beiden Unterdruckkammern bestehen unterschiedliche Druckniveaus, die aneinander angeglichen werden. So wird verhindert, dass Umgebungsluft in die Schweißzone in der ersten Unterdruckkammer gelangen kann. Die Konstruktion und Prozessführung, insbesondere die schnelle Regelung der Druckdifferenz, einer solchen Schweißvorrichtung mit mehrstufiger Unterdruckkammer ist jedoch aufwändig.

Ausgehend vom genannten Stand der Technik liegt der vorliegenden Erfindung die Aufgabe zugrunde, eine Laser-Schweißvorrichtung bereitzustellen, mit der ein Laserschweißen im Unterdruck, insbesondere im Vakuum, auf konstruktiv einfache Weise auch für große Werkstücke möglich ist.

Diese Aufgabe wird erfindungsgemäß gelöst durch die Laser-Schweißvorrichtung mit den Merkmalen des unabhängigen Patentanspruchs 1, die den ersten Aspekt der Erfindung darstellt, und durch das Verfahren zum Laserschweißen von Werkstücken mit den Merkmalen des unabhängigen Patentanspruchs 15, das den zweiten Aspekt der Erfindung darstellt. Weitere Merkmale und Details der vorliegenden Erfindung ergeben sich aus den Unteransprüchen, der Beschreibung sowie den Zeichnungen. Merkmale und Details, die im Zusammenhang mit dem Vorrichtungsaspekt beschrieben sind, gelten dabei selbstverständlich auch im Zusammenhang mit dem Verfahrensaspekt, und jeweils umgekehrt, so dass alle Merkmale und Details des Vorrichtungsaspekts wechselseitig auch im Zusammenhang mit den Merkmalen des Verfahrensaspekts, und umgekehrt, gelten, so dass darauf jeweils wechselseitig Bezug genommen wird. Insbesondere wird im Zusammenhang mit den einzelnen Komponenten der Laser-Schweißvorrichtung auch deren Funktionsweise erläutert, was insoweit dann gleichzeitig auch Verfahrensmerkmale des erfindungsgemäßen Verfahrens darstellt.

Die vorliegende Erfindung ist auf das Laserschweißen im Unterdruck, insbesondere im Vakuum gerichtet. "Unterdruck" ist grundsätzlich jeder Druck unterhalb von Atmosphärendruck. Das bedeutet, dass während des Schweißvorgangs in der Prozesskammer eine Druckreduktion erfolgt, was mittels Evakuierung der Prozesskammer erfolgt. Gemäß einer bevorzugten Ausführungsform ist die Erfindung auf das wie eingangs beschriebene Laserschweißen im Vakuum gerichtet. Das Schweißen erfolgt dann insbesondere bei Drücken von 10-100 mbar. Es können aber auch darunter liegende Drücke realisiert werden. Die Erfindung ist nicht auf bestimmte Druckwerte beschränkt. Im Folgenden wird zu Vereinfachungszwecken vom Laserschweißen im Vakuum gesprochen, was das Schweißen im Unterdruck mit einschließt.

Mit der vorliegenden Erfindung lassen sich mittels Laserschweißen im Vakuum nunmehr auch Werkstücke mit sehr großen Dimensionen und Abmessungen schweißen. Insbesondere lassen sich Werkstücke schweißen, bei denen eine lange Schweißnaht erzeugt wird. Mit der vorliegenden Erfindung lassen sich insbesondere lange Schweißnähte erzeugen, beispielsweise Schweißnähte von mehreren Metern, beispielsweise von bis zu 5m, oder mehr. Die Erfindung ist selbstverständlich nicht auf bestimmte Schweißnahtlängen beschränkt.

Gemäß einer Ausführungsform lassen sich mit der erfindungsgemäßen Laser-Schweißvorrichtung Dickbleche im Vakuum schweißen. Gemäß einem Aspekt der Erfindung wird die erfindungsgemäße Laser-Schweißvorrichtung und/oder das erfindungsgemäße Verfahren zum Laserschweißen deshalb zum Schweißen von Dickblechen verwendet. Dickbleche werden für unterschiedlichste Zwecke eingesetzt. Ein Beispiel, das zur Verdeutlichung näher beschrieben wird, ist die Herstellung von Monopiles für Offshore-Windkraftanlagen unter Verwendung von Dickblechen. Derartige Dickbleche haben nicht selten eine Blechdicke von 60mm bis 120mm und müssen zur Erzeugung des Monopiles aneinander geschweißt werden. Das Schweißen stellt dabei einen der Hauptarbeitsgänge dar. Die Dickbleche werden zunächst in die gewünschte Kontur geformt und anschließend entlang ihrer Stoßkanten zu Rohrstücken geschweißt. Die einzelnen Rohrstücke wiederum werden anschließend, nicht selten bis zu einer Länge von über 80 Metern, Stück für Stück durch weitere Schweißnähte miteinander verbunden.

Im Dickblechbereich werden konventionell meist Lichtbogen-Schweißverfahren eingesetzt. Bei allen Lichtbogen-Schweißverfahren müssen großvolumige Schweißnahtvorbereitungen an den zu verschweißenden Bauteilen vorgesehen werden. Das Schweißen derartiger Dickbleche dauert mit den konventionellen Schweißverfahren in der Regel mehrere Stunden. Durch das Laserstrahlschweißen im Vakuum kann diese erforderliche Schweißzeit erheblich reduziert werden, was diese Form des Laserstrahlschweißen zu einer wirtschaftlichen Alternative macht. Der Vorteil dieser Modifikation des Laserstrahlschweißens liegt in der herabgesetzten Verdampfungstemperatur, was die Temperatur im Schmelzbad und dadurch auch dessen Größe reduziert. Die Folge ist eine stabilere Dampfkapillare, die die durch den Laserstrahl eingebrachte Energie besser in der Tiefe des Werkstücks umsetzen kann. Im direkten Vergleich zwischen dem Laserstrahlschweißen im Vakuum und an Atmosphäre bleibt das Schmelzbadvolumen dabei ungefähr gleich. Aufgrund der möglichen hohen Einschweißtiefe eignet sich das Verfahren besonders für Dickblechanwendungen, denn auch große Blechdicken können in einer Lage verschweißt werden.

Besonders bei großen Blechdicken ist Fertigungsbedingt immer mit Toleranzen zu rechnen. Zwischen den einzelnen Blechen bestehen vor dem Schweißvorgang in der Regel Spalte, nicht selten Spalte von 1mm bis 2mm oder mehr. Der üblicherweise für das Laserstrahlschweißen im Vakuum erforderliche technische Nullspalt kann daher in der Regel nicht erreicht werden. Dies ist nachteilig, denn dadurch wird es schwierig, den für den Schweißvorgang erforderlichen Unterdruck zu erzeugen und während des Schweißvorgangs aufrecht zu erhalten. Zudem destabilisieren die auftretenden Leckageströme im Spalt den Schweißprozess, was zu einer nennenswerten Spritzerbildung führen kann.

Gemäß der vorliegenden Erfindung kann dieses Problem nun vermieden werden, indem zusätzlich zu den bekannten Komponenten "Lasereinrichtung" und "Prozesskammer" nunmehr eine weitere Komponente in Form wenigstens einer in besonderer Weise ausgebildeten "Spaltabdeckeinrichtung" zum Einsatz kommt, die ein Spaltabdeckelement aufweist, über das auftretende Spalte während des Schweißvorgangs abgedeckt werden. Wie dies im Einzelnen realisiert wird, wird im weiteren Verlauf der Beschreibung näher erläutert. Durch die Verwendung einer solchen Spaltabdeckeinrichtung wird es nunmehr möglich, auf konstruktiv und prozesstechnisch einfache Weise auch große und toleranzbehaftete Bauteile, wie beispielsweise Dickbleche, zwischen denen ein Spalt auftritt, im Vakuum zu verschweißen. Dabei lassen sich sowohl mobile, als auch quasi-stationäre und stationäre Anwendungen realisieren. Die Schweißprozesse zeichnen sich dabei durch eine hohe Prozessstabilität aus.

Gemäß dem ersten Aspekt der Erfindung wird eine Laser-Schweißvorrichtung bereitgestellt, welche die Merkmale des unabhängigen Patentanspruchs 1 aufweist.

Die Laser-Schweißvorrichtung ist für das Schweißen von Werkstücken im Vakuum, bereitgestellt. Gemäß einer Ausführungsform ist die Laser-Schweißvorrichtung bereitgestellt, um zwei Werkstücke miteinander zu verschweißen. Hinsichtlich der technischen Prinzipien und der Funktionsweise der Laser-Schweißvorrichtungen wird auch auf die erläuternden Angaben weiter oben, insbesondere auch in der Beschreibungseinleitung Bezug genommen, die damit auch zur Offenbarung der vorliegenden Erfindung gemacht werden.

Ein erste Komponente der Laser-Schweißvorrichtung ist eine "Lasereinrichtung". Diese ist konfiguriert zur Erzeugung und Einkopplung eines Bearbeitungslaserstrahls in eine Schweißzone der Laser-Schweißvorrichtung. Das heißt, unter dem Begriff Lasereinrichtung sind alle Elemente subsummiert, die zur Erzeugung des Bearbeitungslaserlichts, zur Formung und Beeinflussung des Bearbeitungslaserstrahls und zur Einkopplung des Bearbeitungslaserstrahls in die Schweißzone benötigt werden. Die "Schweißzone" ist insbesondere ein bestimmter, festgelegter Bereich innerhalb der Laser-Schweißvorrichtung, in dem der Schweißvorgang durchgeführt wird, sprich in dem die Schweißnaht erzeugt wird. Die Schweißzone ist insbesondere derjenige Bereich, zumindest teilweise in der Prozesskammer, in dem geschweißt, sprich die Schweißnaht erzeugt wird. Während des Schweißvorgangs befindet sich zumindest derjenige Bereich des Werkstücks, welcher geschweißt wird, in der Schweißzone. Bei der Schweißzone handelt es sich insbesondere um den schmelzflüssigen Bereich, in dem der Schweißprozess selbst stattfindet.

Im Folgenden werden beispielhaft einige Komponenten beschrieben, die Bestandteil der Lasereinrichtung sein können. Gemäß einer Ausführungsform weist die Lasereinrichtung eine Laserquelle auf, in der das Laserlicht erzeugt wird. Gemäß einer Ausführungsform weist die Lasereinrichtung eine Einrichtung zur Strahlformung und/oder Strahlführung und/oder Strahlablenkung des Bearbeitungslaserstrahls auf. Dafür kann neben optische Elementen beispielsweise eine geeignete Führungseinrichtung bereitgestellt sein. Beispielsweise kann diese Führungseinrichtung höhenveränderlich, beispielsweise in Form eines Faltenbalgs oder zumindest bereichsweise als Faltenbalg, ausgebildet sein. Dadurch kann bei Bedarf der Fokus des Bearbeitungslaserstrahls in der Schweißzone und damit auf dem zu schweißenden Werkstück, verändert werden. Zum Einkoppeln des Bearbeitungslaserstrahls in die Schweißzone weist die Lasereinrichtung gemäß einer Ausführungsform ein Basiselement auf, das beispielsweise als Basisplatte ausgebildet ist. Die einzelnen Komponenten der Lasereinrichtung sind gemäß einer Ausführungsform auf dem Basiselement, insbesondere ortsfest, angeordnet oder ausgebildet. In dem Basiselement befindet sich insbesondere eine Durchgangsöffnung, durch die der Bearbeitungslaserstrahl hindurchtritt und in die Schweißzone eintritt. In, vor oder unterhalb der Durchgangsöffnung kann beispielsweise ein transparentes Schutzelement, etwa ein Schutzglas, bereitgestellt sein, welches verhindert, dass während des Schweißvorgangs entstehende Verunreinigungen in die Lasereinrichtung eindringen können.

Wie im weiteren Verlauf der Beschreibung verdeutlicht wird, kann das Basiselement verschiedene Funktionen im Zusammenhang mit einer nachfolgend beschriebenen Prozesskammer aufweisen. Gemäß einer Ausführungsform stellt das Basiselement ein zur Prozesskammer unabhängiges, eigenständiges Bauteil dar, welches dann relativ zur Prozesskammer bewegt werden kann. Auf diese Weise kann die Lasereinrichtung relativ zur Prozesskammer und unabhängig zur Prozesskammer bewegt werden. Gemäß einer anderen Ausführungsform stellt das Basiselement einen Bestandteil der Prozesskammer dar, beispielsweise einen Prozesskammerabschluss. In diesem Fall ist die Lasereinrichtung relativ zur Prozesskammer nicht beweglich. Eine Bewegung der Lasereinrichtung wird dann realisiert, indem die Prozesskammer bewegt wird.

Eine weitere Komponente der Laser-Schweißvorrichtung ist eine "Prozesskammer". Da die Laser-Schweißvorrichtung mehrere Prozesskammern aufweisen kann, wird diese Prozesskammer zu Unterscheidungszwecken als erste Prozesskammer bezeichnet. Die erste Prozesskammer weist einen ersten, der Lasereinrichtung zugewandten Prozesskammerabschluss auf. Hierbei kann es sich um den oberen Prozesskammerabschluss handeln, beispielsweise ein Deckenelement oder Deckelelement der ersten Prozesskammer. Der erste Prozesskammerabschluss stellt einen Bereich der Prozesskammerwand dar, welche einen Prozessraum begrenzt. Weiterhin weist die Prozesskammer einen zweiten, der Schweißzone zugewandten Prozesskammerabschluss auf, der beabstandet zum ersten Prozesskammerabschluss ist. Hierbei kann es sich um den unteren Prozesskammerabschluss handeln, beispielsweise ein Bodenelement der ersten Prozesskammer. Der zweite Prozesskammerabschluss stellt ebenfalls einen Bereich der Prozesskammerwand dar, welche den Prozessraum begrenzt. Gemäß einer Ausführungsform ist in dem zweiten Prozesskammerabschluss eine Austrittsöffnung für den Bearbeitungslaserstrahl in die Schweißzone ausgebildet. Gemäß einer Ausführungsform liegen die Austrittsöffnung und die Schweißzone in einer Ebene. Darunter subsummiert ist auch die Situation, dass die Schweißzone in Strahlrichtung des Bearbeitungslaserstrahls geringfügig unterhalb der von der Austrittsöffnung definierten Ebene liegt, etwa wenn wie weiter unten beschriebene Dichtungseinrichtungen zum Einsatz kommen. Gemäß einer Ausführungsform erstreckt sich die Austrittsöffnung über die gesamte Fläche des zweiten Prozesskammerabschlusses. In diesem Fall stellt die Austrittsöffnung den zweiten Prozesskammerabschluss dar. Gemäß einer Ausführungsform ist die erste Prozesskammer in Richtung der Schweißzone offen. Weiterhin weist die erste Prozesskammer einen sich zwischen dem ersten und zweiten Prozesskammerabschluss erstreckenden seitlichen dritten Prozesskammerabschluss auf. Hierbei kann es sich um den seitlichen Prozesskammerabschluss handeln, beispielsweise die Seitenwand der ersten Prozesskammer. Auch der dritte Prozesskammerabschluss stellt einen Bereich der Prozesskammerwand dar, welche einen Prozessraum begrenzt. Gemäß einer Ausführungsform hat die erste Prozesskammer die Form eines Quaders, der insbesondere an einer Seite offen ist beziehungsweise eine Öffnung aufweist.

Wenn die erste Prozesskammer mit einem zweiten Prozesskammerabschluss bereitgestellt ist, welcher eine Austrittsöffnung aufweist, ist die erste Prozesskammer in Strahlrichtung des Bearbeitungslaserstrahls insbesondere vor der Schweißzone bereitgestellt. Das bedeutet, die erste Prozesskammer befindet sich oberhalb der Schweißzone, und damit oberhalb der zu schweißenden Werkstücke. Die Begriffe "vor" und "oberhalb", ebenso wie die noch folgenden Begriffe "nach" und "unterhalb" sind dabei insbesondere räumlich zu verstehen, insbesondere in Bezug auf die räumliche Lage der Schweißzone und/oder die Richtung des Bearbeitungslaserstrahls.

Gemäß einer Ausführungsform ist die erste Prozesskammer als eine lokale Prozesskammer bereitgestellt, die die zu verschweißenden Werkstücke über eine definierte Länge überdeckt.

Gemäß einer Ausführungsform ist die Laser-Schweißvorrichtung als stationäre oder quasi-stationäre Laser-Schweißvorrichtung ausgebildet. Bei dieser Ausführungsform ist erste Prozesskammer während des Schweißvorgangs fixiert und bewegt sich nicht. Hierzu werden nachfolgend einige Ausführungsbeispiele genannt.

Vor und zur Durchführung des Schweißvorgangs wird die erste Prozesskammer gemäß einer Ausführungsform auf den zu schweißenden Werkstücken aufgesetzt, wobei die Prozesskammer, insbesondere der dritte seitliche Prozesskammerabschluss, die Schweißzone umgibt. Der Prozessraum, in dem der für den Schweißvorgang erforderliche Unterdruck erzeugt wird, wird in diesem Fall durch den ersten Prozesskammerabschluss, den dritten Prozesskammerabschluss und den zweiten Prozesskammerabschluss begrenzt, wobei die Austrittsöffnung durch die schweißenden Werkstücke abgedeckt wird. Wenn der Schweißvorgang an dieser Stelle beendet ist, wird die erste Prozesskammer versetzt, so dass dann ein nächster, anschließender Abschnitt geschweißt werden kann. In einem solchen Fall lässt sich der Schweißvorgang insbesondere mobil oder quasi-stationär durchführen. Dies wird im weiteren Verlauf der Beschreibung weiter unten näher erläutert.

Wenn der zweite Prozesskammerabschuss keine Austrittsöffnung aufweist, ist die Prozesskammer nach unten, und damit allseitig abgeschlossen. In diesem Fall befindet sich die Schweißzone gemäß einer anderen Ausführungsform komplett innerhalb der ersten Prozesskammer. In einem solchen Fall lässt sich der Schweißvorgang insbesondere stationär durchführen. Dies wird im weiteren Verlauf der Beschreibung weiter unten näher erläutert.

Gemäß einer weiteren Ausführungsform ist die Laser-Schweißvorrichtung als mobile Laser-Schweißvorrichtung ausgebildet. Bei dieser Ausführungsform ist die erste Prozesskammer für mobile Anwendungen ausgebildet und bereitgestellt. Dies wird im weiteren Verlauf der Beschreibung weiter unten näher erläutert. Durch die besondere Ausgestaltung und Funktionsweise der Spaltabdeckeinrichtung ist die Laser-Schweißvorrichtung für eine solche mobile Anwendung im Vergleich zur Lösung aus der DE 10 2021 104 512 A1 konstruktiv einfacher aufgebaut, benötigt keine schnelle Druckregelung und gewährleistet gleichzeitig durch die konstruktive Vermeidung der durch die zwischen den Bauteilen vorliegenden Spalte in das mobile Vakuumsystem eindringenden Leckageströme einen stabilen Schweißprozess.

In Bezug auf die zu schweißenden Werkstücke stellt die erste Prozesskammer insbesondere eine obere Prozesskammer dar. Die erste Prozesskammer ist eine Unterdruckkammer, insbesondere eine Vakuumkammer, und damit ein oberes Unterdrucksystem beziehungsweise Vakuumsystem.

Um das Volumen der ersten Prozesskammer, welches für den Schweißvorgang evakuiert werden muss, so gering wie möglich zu halten, wird gemäß einer Ausführungsform ein begrenzter, lokaler Unterdruck erzeugt, der auf eine bestimmte Fläche beziehungsweise auf ein bestimmtes Volumen begrenzt ist. Bei dieser Fläche handelt es sich insbesondere um die Schweißzone, in der der eigentliche Schweißvorgang stattfindet, oder um die unmittelbare Umgebung der Schweißzone. Der Unterdruck wird dann nur dort bereitgestellt, wo er für den Schweißvorgang tatsächlich benötigt wird. Das bedeutet, die erste Prozesskammer ist gemäß einer Ausführungsform von ihren Ausmaßen so dimensioniert, dass sie die Schweißzone unmittelbar, das heißt nur mit einem geringen räumlichen Abstand, bezogen auf die Gesamtgröße der zu schweißenden Werkstücke, umgibt und begrenzt. Auf diese Weise wirken nicht die gesamten zu schweißenden Werkstücke mit der ersten Prozesskammer zusammen, sondern nur diejenigen Bereiche der Werkstücke, in denen tatsächlich geschweißt wird.

Gemäß einer Ausführungsform ist die Größe und/der das Volumen der ersten Prozesskammer in Relation und damit in Abhängigkeit zu der Ausdehnung der zu erzeugenden Schweißnaht und/oder in Relation zu einem Spalt zwischen den zu schweißenden Werkstücken und/oder in Relation zur Einschweißtiefe ausgebildet beziehungsweise bereitgestellt. Wenn mit der Laser-Schweißvorrichtung Dickbleche geschweißt werden, kann die erste Prozesskammer beispielsweise eine Breite von 200mm und eine Höhe von 100mm aufweisen. Die Länge der Prozesskammer ist an die Länge der zu erzeugenden Schweißnaht angepasst. Sie korrespondiert beispielsweise zu der Länge der Schweißzone. Das genannte Beispiel ist selbstverständlich optional und nicht ausschließlich zu verstehen.

Gemäß der Erfindung ist die Lasereinrichtung relativ zur Schweißzone in einer definierten Schweißrichtung beweglich. Gemäß einer Ausführungsform ist realisiert, dass die Lasereinrichtung bewegt wird, während die Schweißzone unbeweglich ist. In diesem Fall wird die Lasereinrichtung in Schweißrichtung entlang der Schweißzone geführt. Die "Schweißrichtung" ist insbesondere die Bewegungsrichtung beziehungsweise das Bewegungsziel der zu erzeugenden beziehungswese der entstehenden Schweißnaht. Das heißt, es handelt sich um die Richtung beziehungsweise der Verlauf, in der/dem die Schweißnaht innerhalb der Schweißzone erzeugt wird. Grundsätzlich denkbar sind auch Ausführungsformen, bei denen die Lasereinrichtung unbeweglich ist, während die Schweißzone an der Lasereinrichtung vorbeigeführt wird.

Erfindungsgemäß ist die Laser-Schweißvorrichtung weiterhin durch folgende Merkmale gekennzeichnet: In der Laser-Schweißvorrichtung ist wenigstens eine "Spaltabdeckeinrichtung" bereitgestellt, beziehungsweise, die Laser-Schweißvorrichtung weist wenigstens eine Spaltabdeckeinrichtung auf. Da die Laser-Schweißvorrichtung mehrere Spaltabdeckeinrichtungen aufweisen kann, wird diese Spaltabdeckeinrichtung zu Unterscheidungszwecken als erste Spaltabdeckeinrichtung bezeichnet. Die erste Spaltabdeckeinrichtung ist, ebenso wie die nachfolgend noch beschriebenen weiteren Spaltabdeckeinrichtungen, konfiguriert, um einen Spalt abzudecken. Ein Spalt ist dabei insbesondere eine einen Zwischenraum bildenden längliche Öffnung. Da der Schweißvorgang im Vakuum stattfindet, sind Spalte jeglicher Art grundsätzlich unerwünscht, da diese das Erzeugen und Beibehalten eines Vakuums während des Schweißvorgangs zumindest erheblich erschweren. Die Spaltabdeckeinrichtungen dienen insbesondere dazu, unerwünschte Leckagen zu vermeiden. Die Spaltabdeckeinrichtung hat insbesondere den Zweck einen Spalt abzudecken oder zuzudecken. Dazu weist die Spaltabdeckeinrichtung insbesondere zumindest ein Spaltabdeckelement auf, das sich über den Spalt ausbreitet und diesen bedeckt.

An dieser Stelle wird die erste Spaltabdeckeinrichtung sowie deren Funktionsweise zunächst in allgemeiner Weise beschrieben. Verschiedene konkretere Ausgestaltungen werden im weiteren Verlauf der Beschreibung näher erläutert.

Je nach Ausgestaltung der Laser-Schweißvorrichtung kann die erste Spaltabdeckeinrichtung zum Abdecken eines Spalts zwischen den zu verschweißenden Werkstücken bereitgestellt sein. Bei diesem Spalt handelt es sich beispielsweise um einen Fügespalt zwischen den Werkstücken. Werden Dickbleche verschweißt, können derartige Spalte beispielsweise zwischen 1mm und 2mm groß sein. Gemäß einer anderen Ausführungsform ist die erste Spaltabdeckeinrichtung alternativ oder zusätzlich zum Abdecken eines Spalts in der ersten Prozesskammer bereitgestellt.

Die erste Spaltabdeckeinrichtung ist, in Bezug auf die Strahlrichtung des Bearbeitungslaserstrahls, vor beziehungsweise oberhalb und/oder unterhalb der Schweißzone bereitgestellt. Wie weiter oben schon allgemein dargestellt wurde, bedeutet "oberhalb" insbesondere, dass sich die Spaltabdeckeinrichtung in Strahlrichtung des Bearbeitungslaserstrahls vor der Schweißzone befindet. "Unterhalb" bedeutet insbesondere, dass sich die Strahlabdeckeinrichtung in Strahlrichtung des Bearbeitungslaserstrahls hinter der Schweißzone befindet. "Vor" bedeutet, dass sich die Spaltabdeckeinrichtung in Schweißrichtung vor dem Bearbeitungslaserstrahl befindet, das heißt diesem vorläuft.

Für die Abdeckung eines Spalts weist die erste Spaltabdeckeinrichtung ein sich in seiner Ausrichtung in Bezug auf die Schweißrichtung zumindest teilweise veränderliches erstes Spaltabdeckelement auf. Das bedeutet, dass sich die Ausrichtung von zumindest Teilen des ersten Spaltabdeckelements während des Schweißvorgangs verändern kann. Beispielsweise kann das erste Spaltabdeckelement im Ausgangszustand in einer ersten Ausrichtung zur Schweißrichtung ausgerichtet sein. Während des Schweißvorgangs kann dann zumindest ein Teilbereich des Spaltabdeckelements eine von dieser ersten Ausrichtung abweichende zweite Ausrichtung einnehmen. Das erste Spaltabdeckelement ist folglich so ausgebildet, dass es den Spalt, in Bezug auf die Relativbewegung der Lasereinrichtung, variabel abdecken kann. Dies wird im weiter unten anhand verschiedener Ausführungsformen näher erläutert.

Gemäß einer Ausführungsform kann das erste Spaltabdeckelement zu Beginn des Schweißvorgangs eine parallele Ausrichtung zur Schweißrichtung aufweisen. Während des Schweißvorgangs kann dann zumindest ein Teilbereich des ersten Spaltabdeckelements eine von dieser ersten Ausrichtung abweichende anti-parallele Ausrichtung einnehmen. Gemäß einer Ausführungsform kann das erste Spaltabdeckelement zu Beginn des Schweißvorgangs eine anti-parallele Ausrichtung zur Schweißrichtung aufweisen. Während des Schweißvorgangs kann dann zumindest ein Teilbereich des ersten Spaltabdeckelements eine von dieser ersten Ausrichtung abweichende parallele Ausrichtung einnehmen. Gemäß einer anderen Ausführungsform kann das erste Spaltabdeckelement zu Beginn des Schweißvorgangs eine parallele oder anti-parallele Ausrichtung zur Schweißrichtung aufweisen. Während des Schweißvorgangs kann dann zumindest ein Teilbereich des ersten Spaltabdeckelements eine von dieser ersten Ausrichtung in einem Winkel abweichende zweite Ausrichtung einnehmen.

Dies soll an dieser Stelle zunächst anhand eines allgemeinen Beispiels verdeutlicht werden. Zu Beginn des Schweißvorgangs kann das erste Spaltabdeckelement in seiner Gesamtheit den Spalt abdecken. Über den Spalt kann es somit nicht zu unerwünschten Leckagen kommen. Während des Schweißvorgangs entsteht in der Schweißzone eine Schweißnaht in der definierten Schweißrichtung. Der die Schweißnaht erzeugende Bearbeitungslaserstrahl wird dazu relativ zu der Schweißzone bewegt. Damit einhergehend muss dann auch das erste Spaltabdeckelement zumindest in Teilen in seiner Ausrichtung so verändert werden, dass es einerseits den voranschreitenden Schweißvorgang nicht behindert, gleichzeitig aber auch bei der Bewegung des Bearbeitungslaserstrahls den Spalt stets so abdeckt, dass es während des gesamten Schweißvorgangs nicht zu unerwünschten Leckagen kommt. Dies kann auf unterschiedliche Weise realisiert werden. Einige bevorzugte Ausführungsformen hierzu, die das Wesen und die Funktionsweise der ersten Spaltabdeckeinrichtung und des Spaltabdeckelements verdeutlichen, werden im weiteren Verlauf der Beschreibung näher erläutert.

Gemäß einer Ausführungsform ist das erste Spaltabdeckelement in Form eines langgestreckten Bauteils ausgebildet. Ein solches Bauteil hat eine Haupterstreckungsrichtung in Längsrichtung, die größer, insbesondere um ein Vielfaches größer, ist als die Erstreckung des Bauteils in Breitenrichtung. Gemäß einer Ausführungsform weist das erste Spaltabdeckelement eine Länge auf, die zur maximalen Länge des abzudeckenden Spalts korrespondiert, insbesondere dieser entspricht. Gemäß einer Ausführungsform weist das erste Spaltabdeckelement eine Breite auf, die größer ist als die Breite des abzudeckenden Spalts, so dass sie den Spalt seitlich überlappt.

Um eine wie oben beschriebene Veränderung der Ausrichtung des ersten Spaltabdeckelements zu erreichen, ist das erste Spaltabdeckelement gemäß einer Ausführungsform aus einem flexiblen Material bereitgestellt. Beispielsweise kann das erste Spaltabdeckelement als ein biegsames, dehnbares, elastisches, formbares, gelenkiges, nachgebendes, oder dergleichen, Element ausgebildet sein. Gemäß einer Ausführungsform ist das erste Spaltabdeckelement aus einem dünnen, biegsamen Blechelement bereitgestellt. Gemäß einer Ausführungsform ist das erste Spaltabdeckelement als faltbares Spaltabdeckelement bereitgestellt. Gemäß einer Ausführungsform ist das erste Spaltabdeckelement als aufrollbares Spaltabdeckelement bereitgestellt. Im Folgenden werden die Funktionsweise und die technischen Wirkprinzipien des ersten Spaltabdeckelements insbesondere anhand eines ersten Spaltabdeckelements gemäß der letztgenannten Ausführungsform beschrieben, wobei die Erfindung selbstverständlich nicht auf dieses genannte Ausführungsbeispiel beschränkt ist.

Gemäß einer Ausführungsform wirkt die erste Spaltabdeckeinrichtung mit der Lasereinrichtung und/oder der ersten Prozesskammer zusammen. Das bedeutet insbesondere folgendes: Wenn die Lasereinrichtung oder die erste Prozesskammer relativ zur Schweißzone beweglich ist und bewegt wird, wird mit der Bewegung gleichzeitig auch die erste Spaltabdeckeinrichtung aktiviert, derart, dass sich die Ausrichtung zumindest eines Teilbereichs des ersten Spaltabdeckelements in Bezug auf die Schweißrichtung ändert. Gemäß einer Ausführungsform sind die Betätigung der ersten Spaltabdeckeinrichtung und die Bewegung der Lasereinrichtung gekoppelt.

Gemäß einer Ausführungsform ist die erste Spaltabdeckeinrichtung in Schweißrichtung vor der Lasereinrichtung oder vor der ersten Prozesskammer bereitgestellt.

Gemäß einer Ausführungsform weist die Laser-Schweißvorrichtung eine weitere Prozesskammer auf. Diese wird zu Unterscheidungszwecken als zweite Prozesskammer bezeichnet. Gemäß einer Ausführungsform ist die zweite Prozesskammer als Unterdruckkammer, insbesondere als Vakuumkammer, ausgebildet. Die zweite Prozesskammer ist in Strahlrichtung des Bearbeitungslaserstrahls hinter beziehungsweise unterhalb der Schweißzone bereitgestellt. Sie weist einen mit einer Öffnung versehenen ersten, der Schweißzone zugewandten Prozesskammerabschluss, beispielsweise in Form eines Bodenelements, einen zweiten, der Schweißzone abgewandten Prozesskammerabschluss, beispielsweise in Form eines Deckelelements oder Deckenelements, sowie einen sich zwischen dem ersten und zweiten Prozesskammerabschluss erstreckenden seitlichen dritten Prozesskammerabschluss, beispielsweise eine Seitenwand, auf. Die Prozesskammerabschlüsse stellen Bestandteile der Prozesskammerwand dar, welche einen Prozessraum begrenzen. Gemäß einer Ausführungsform ist die zweite Prozesskammer in Richtung der Schweißzone offen. Gemäß einer Ausführungsform hat die zweite Prozesskammer die Form eines Quaders, der insbesondere an einer Seite offen ist beziehungsweise eine Öffnung aufweist.

Gemäß einer Ausführungsform ist die zweite Prozesskammer relativ zur Schweißzone in der definierten Schweißrichtung beweglich. Gemäß einer Ausführungsform korrespondiert die Bewegung der zweiten Prozesskammer zur Bewegung der Lasereinrichtung oder der ersten Prozesskammer. Bevorzugt sind diese Bewegungen gekoppelt und/oder synchronisiert. Handelt es sich bei der Laser-Schweißvorrichtung um eine stationäre oder quasi-stationäre Laser-Schweißvorrichtung, wird die zweite Prozesskammer in gleicher Weise bewegt, wie dies bei der ersten Prozesskammer, wie oben beschrieben, der Fall ist. Handelt es sich bei der Laser-Schweißvorrichtung um eine mobile Laser-Schweißvorrichtung, wird die zweite Prozesskammer in gleicher Weise bewegt, wie dies bei der ersten Prozesskammer, wie oben beschrieben, der Fall ist.

In Bezug auf die Lage der Schweißzone und/oder die Lage der zu schweißenden Werkstücke handelt es sich bei der ersten Prozesskammer beispielsweise um eine obere Prozesskammer, während es sich bei der zweiten Prozesskammer um eine untere Prozesskammer handelt. Die erste Prozesskammer kann beispielsweise auf der Seite der Schweißnahtoberfläche, das heißt auf der Sichtseite der Schweißnaht bereitgestellt sein. Die zweite Prozesskammer kann beispielsweise auf der Rückseite der Schweißnaht, das heißt auf der Wurzelseite der Schweißnaht, bereitgestellt sein.

Zur Erzeugung eines Unterdrucks, insbesondere eines Vakuums, ist/sind die erste Prozesskammer und/oder die zweite Prozesskammer gemäß einer Ausführungsform mit einer Evakuierungseinrichtung verbunden.

Gemäß einer Ausführungsform ist in der zweiten Prozesskammer wenigsten eine Schmelzbadstützeinrichtung bereitgestellt. Das Problem bei Schweißverfahren ist, dass das flüssige Metall nach unten austropfen würde. Beim Durchschweißen dicker Platten kann es beispielsweise zu einem Ausfluss der Schmelze aus der Fuge kommen, wenn die Oberflächenspannung nicht mehr ausreicht, den hydrostatischen Druck des flüssigen Metalls zu kompensieren. Dies kann mittels einer Schmelzbadstützeinrichtung verhindert werden.

Beim Laserstrahlschweißen können durch Anlegen eines äußeren Magnetfelds und/oder einer elektrischen Spannung, die Ströme im Schmelzbad verursacht, dort Lorentzkräfte erzeugt werden. Dies kann beispielsweise mit Hilfe eines elektromagnetischen Systems erreicht werden, das direkt im Schmelzbad Lorentz-Kräfte erzeugt, die durch ihre integrale Wirkung die Schmelze anheben oder absenken sowie durch ihre lokal unterschiedliche Stärke und Richtung das Strömungsverhalten in der Schmelze verändern. Eine elektromagnetische Schmelzbadstütze beispielsweise induziert Lorenzkräfte, die die Schmelze in der Fuge halten. Dadurch sind beim Laserstrahlschweißen sehr flache Schweißnahtwurzeln realisierbar, und das in höchster Qualität.

Gemäß einer Ausführungsform weist die Laser-Schweißvorrichtung eine weitere Spaltabdeckeinrichtung auf. Diese wird zu Unterscheidungszwecken als zweite Spaltabdeckeinrichtung bezeichnet. Die zweite Spaltabdeckeinrichtung ist zum Abdecken eines Spalts zwischen den zu verschweißenden Werkstücken konfiguriert. Die zweite Spaltabdeckeinrichtung ist unterhalb der Schweißzone und/oder unterhalb der zu schweißenden Werkstücke bereitgestellt. Die zweite Spaltabdeckeinrichtung weist ein sich in seiner Ausrichtung in Bezug auf die Schweißrichtung veränderliches zweites Spaltabdeckelement auf. Die zweite Spaltabdeckeinrichtung wirkt mit der zweiten Prozesskammer zusammen und ist in Schweißrichtung vor der zweiten Prozesskammer bereitgestellt. Hinsichtlich ihrer Ausgestaltung und Funktion sind die zweite Spaltabdeckeinrichtung und das zweite Spaltabdeckelement gemäß einer Ausführungsform ausgebildet wie die erste Spaltabdeckeinrichtung und das erste Spaltabdeckelement. Die Offenbarung zum ersten Spaltabdeckeinrichtung und zum ersten Spaltabdeckelement wird deshalb vollinhaltlich auch zur Offenbarung der zweiten Spaltabdeckeinrichtung und des zweiten Spaltabdeckelements gemacht.

Gemäß einer Ausführungsform weist die Laser-Schweißvorrichtung eine weitere Spaltabdeckeinrichtung auf. Diese wird zu Unterscheidungszwecken als dritte Spaltabdeckeinrichtung bezeichnet. Die dritte Spaltabdeckeinrichtung ist zum Abdecken eines Spalts zwischen den zu verschweißenden Werkstücken und/oder eines Spalts in der ersten Prozesskammer konfiguriert. Die dritte Spaltabdeckeinrichtung ist oberhalb der Schweißzone bereitgestellt. Die dritte Spaltabdeckeinrichtung weist ein sich in seiner Ausrichtung in Bezug auf die Schweißrichtung veränderliches drittes Spaltabdeckelement auf. Die dritte Spaltabdeckeinrichtung wirkt mit der Lasereinrichtung zusammen und ist in Schweißrichtung hinter der Lasereinrichtung bereitgestellt. Das heißt, die dritte Spaltabdeckeinrichtung wird in Bewegungsrichtung der Lasereinrichtung hinter der Lasereinrichtung geführt und ist dieser nachgeführt. Hinsichtlich ihrer Ausgestaltung und Funktion sind die dritte Spaltabdeckeinrichtung und das dritte Spaltabdeckelement gemäß einer Ausführungsform ausgebildet wie die erste und/oder zweite Spaltabdeckeinrichtung und das erste und/oder zweite Spaltabdeckelement. Die Offenbarung zum ersten und/oder zweiten Spaltabdeckeinrichtung und zum ersten und/oder zweiten Spaltabdeckelement wird deshalb vollinhaltlich auch zur Offenbarung der zweiten Spaltabdeckeinrichtung und des zweiten Spaltabdeckelements gemacht.

Gemäß einer Ausführungsform sind die erste Spaltabdeckeinrichtung mit dem ersten Spaltabdeckelement, die zweite Spaltabdeckeinrichtung mit dem zweiten Spaltabdeckelement, und die dritte Spaltabdeckeinrichtung mit dem dritten Spaltabdeckelement jeweils in gleicher Weise ausgebildet.

Gemäß einer Ausführungsform ist das erste Spaltabdeckelement und/der das dritte Spaltabdeckelement mit einem Ende mit der ersten Prozesskammer verbunden, insbesondere über eine geeignete Befestigungseinrichtung. Die Verbindung kann an dem dritten Prozesskammerabschluss, beispielsweise an einem oberen Ende der Prozesskammerseitenwand, bereitgestellt sein.

Gemäß einer Ausführungsform ist das erste Spaltabdeckelement und/oder das zweite Spaltabdeckelement mit einem Ende mit dem zu schweißenden Werkstück verbunden, beispielsweise über eine geeignete Befestigungseinrichtung. Damit wird sichergestellt, dass ein Spalt zwischen den zu schweißenden Werkstücken in Schweißrichtung vor der/den Prozesskammer(n) abgedeckt ist. Die Befestigung kann beispielsweise lösbar erfolgen, etwa über eine magnetische Befestigungseinrichtung, oder dergleichen.

Gemäß einer Ausführungsform sind die Betätigung der ersten Spaltabdeckeinrichtung und die Bewegung der Lasereinrichtung gekoppelt, und/oder die Betätigung der zweiten Spaltabdeckeinrichtung und die Bewegung der zweiten Prozesskammer sind gekoppelt, und/oder die Betätigung der dritten Spaltabdeckeinrichtung und die Bewegung der Lasereinrichtung sind gekoppelt.

Gemäß einer Ausführungsform ist in dem ersten Prozesskammerabschluss der ersten Prozesskammer ein, insbesondere zu der Schweißzone korrespondierender, Spalt ausgebildet. Der Spalt erstreckt sich beispielsweise über die Längserstreckung des ersten Prozesskammerabschlusses und damit über die Längserstreckung der ersten Prozesskammer. Die Länge des Spalts kann zur Länge der Schweißzone korrespondieren und ist insbesondere oberhalb und fluchtend zur Schweißzone bereitgesellt. Wenn die Schweißzone zur Länge der zur erzeugenden Schweißnaht korrespondiert, kann diese beispielsweise eine Länge von bis zu mehreren Metern aufweisen. Der Spalt dient dazu, dass der von der Lasereinrichtung erzeugte Bearbeitungslaserstrahl in die Prozesskammer eingekoppelt werden kann. Der Spalt muss für den Schweißprozess ausreichend groß dimensioniert sein, in jedem Fall so groß, dass der Bearbeitungslaserstrahl problemlos durch den Spalt hindurchtreten kann. Beispielsweise kann der Spalte eine Breite von mehreren Zentimetern aufweisen, beispielsweise eine Breite von 50mm bis 100mm. Selbstverständlich ist die Erfindung nicht auf bestimmte Spaltbreiten beschränkt. Um eine Schweißnaht in der Schweißzone zu erzeugen, ist die Lasereinrichtung gemäß einer Ausführungsform mittels einer Bewegungseinrichtung entlang des Spalts beweglich. Das bedeutet, die Lasereinrichtung kann mittels der Bewegungseinrichtung entlang des Spalts verfahren werden, beispielsweise hin und herbewegt werden. Die Bewegungseinrichtung kann beispielsweise ein Schienensystem aufweisen, auf dem und entlang dessen sich die Lasereinrichtung bewegt. Zudem kann die Bewegungseinrichtung einen geeigneten Antrieb für die Lasereinrichtung aufweisen.

Das erste Spaltabdeckelement der ersten Spaltabdeckeinrichtung ist zur Abdeckung des Spalts bereitgestellt. Wenn die Laser-Schweißvorrichtung zusätzlich eine dritte Spaltabdeckeinrichtung aufweist, ist auch das dritte Spaltabdeckelement der dritten Spaltabdeckeinrichtung zur Abdeckung des Spalts bereitgestellt. In Bewegungsrichtung der Lasereinrichtung, die zur Schweißrichtung korrespondiert, ist die erste Spaltabdeckeinrichtung vor der Lasereinrichtung bereitgestellt, während die dritte Spaltabdeckeinrichtung hinter der Lasereinrichtung bereitgestellt ist. Durch die gekoppelte Bewegung wird bei Bewegung der Lasereinrichtung auch die ersten beziehungsweise auch die dritte Spaltabdeckeinrichtung betätigt, insbesondere deren Spaltabdeckelemente. Die Spaltabdeckelemente dienen dazu, ein Spalt vor und hinter der Lasereinrichtung abzudecken. Wenn die Schweißnaht innerhalb der Prozesskammer in Schweißrichtung erzeugt wird, wird die Lasereinrichtung in entsprechender Weise in Schweißrichtung bewegt. Gleichzeitig besteht das Erfordernis, dass der Spalt in seiner Gesamtheit stets geschlossen bleibt, damit es nicht zu für den Betrieb im Vakuum unerwünschten Leckagen kommt. Der Bearbeitungslaserstrahl wird über die Lasereinrichtung, beispielsweise das Basiselement mit der Durchgangsöffnung, in die Schweißzone eingekoppelt. Im Bereich der Lasereinrichtung ist der Spalt somit durch die Lasereinrichtung selbst, beispielsweise das Basiselement, abgedeckt. Vor und hinter der Lasereinrichtung ist der Spalt durch das erste und dritte Spaltabdeckelement abgedeckt. Wird nun die Lasereinrichtung in Schweißrichtung bewegt, muss auch derjenige Teil des Spalts, durch den der Bearbeitungslaserstrahl hindurchtritt, entsprechend bewegt werden. Dazu muss das Spaltabdeckelement vor der Lasereinrichtung den Spalt in der korrespondierenden Weise freigeben, während das Spaltabdeckelement hinter der Lasereinrichtung den Spalt nachgeführt abdecken muss. Das wird erreicht, indem sich während des Bewegungsvorgangs das erste und/oder dritte Spaltabdeckelement in seiner Ausrichtung in Bezug auf die Schweißrichtung verändert, beispielsweise, indem dieses gefaltet oder aufgerollt wird. Diese Ausgestaltungen werden im weiteren Verlauf der Beschreibung näher erläutert.

Zur Durchführung des Schweißvorgangs wird die erste Prozesskammer auf den zu schweißenden Werkstücken aufgesetzt. Die erste Prozesskammer umgibt die Schweißzone. Dann erfolgt in entsprechender Weise die Schweißung. Bei dieser Ausführung ist es ausreichend, wenn die Laser-Schweißvorrichtung nur eine Prozesskammer, nämlich die erste Prozesskammer aufweist.

Diese Ausführung eignet sich insbesondere für quasi-stationäre, aber auch für stationäre Schweißprozesse. Bei einem quasi-stationären Betrieb weist die erste Prozesskammer im zweiten Prozesskammerabschluss eine Austrittsöffnung auf, über die der Bearbeitungslaserstrahl in die Schweißzone eintritt. Die erste Prozesskammer wird auf den zu schweißenden Werkstücken aufgesetzt. Die Austrittsöffnung wird durch die zu schweißenden Werkstücke verschlossen. Der im ersten Prozesskammerbschluss befindliche Spalt ist durch die ersten und dritten Spaltabdeckelemente und die Lasereinrichtung verschlossen. Während des Schweißvorgangs, bei dem die erste Prozesskammer evakuiert ist, kann es somit nicht zu unerwünschten Leckagen kommen. In der Schweißzone wird die Schweißnaht durch Bewegung der Lasereinrichtung und gekoppelte Betätigung der Spaltabdeckeinrichtungen erzeugt. Gemäß einer Ausführungsform befindet sich die gesamte Schweißzone innerhalb der ersten Prozesskammer. Das bedeutet, dass die komplette Schweißnaht in einem Schweißprozess innerhalb der ersten Prozesskammer erzeugt wird. Die erste Prozesskammer muss während des Schweißprozesses nicht versetzt werden. Die Prozesskammer selbst kann dabei kleiner dimensioniert sein als die Gesamtgröße der zu schweißenden Werkstücke. Die erste Prozesskammer muss, wie weiter oben beschrieben, lediglich die Schweißzone umgeben. Gemäß einer anderen Ausführungsform kann die erste Prozesskammer während des Schweißprozesses auch versetzt werden. Kommt die Lasereinrichtung an einem Ende der ersten Prozesskammer an, wird die Prozesskammer versetzt. Nach erneuter Evakuierung kann dann wieder geschweißt werden. Die gesamte Schweißnaht wird damit abschnittsweise und in diskreten Schweiß-Teilprozessen vorgenommen.

Unterhalb der Schweißzone kann eine zweite Prozesskammer bereitgestellt sein. Die zweite Prozesskammer kann gemäß einer Ausführungsform in gleicher Weise wie die erste Prozesskammer ausgebildet sein und funktionieren. Auf diese Weise kann auch mit einer Wurzelschweißung gearbeitet werden. Oder aber, die zweite Prozesskammer ist in der wie weiter oben beschriebenen Weise ausgebildet. Dann dient sie in erster Linie dazu, unterhalb der Schweißzone, das heißt im Wurzelbereich der entstehenden Schweißnaht, ein Vakuum zu erzeugen. In der zweiten Prozesskammer kann sich dann eine Schmelzbadstützeinrichtung befinden.

Zwischen den zu schweißenden Werkstücken und der ersten und/oder zweiten Prozesskammer schirmt gemäß einer Ausführungsform eine geeignete Dichtungseinrichtung, insbesondere eine statische Dichtung, den Schweißprozess von der Atmosphäre ab.

Im stationären Schweißprozess ist die Prozesskammer allseitig geschlossen und die Werkstücke befinden sich komplett innerhalb der ersten Prozesskammer. Während des gesamten Schweißprozesses wird die erste Prozesskammer nicht versetzt. Der zweite Prozesskammerabschluss weist keine Austrittsöffnung auf. Der Spalt im ersten Prozesskammerbschluss ist durch die Spaltabdeckelemente und die Lasereinrichtung verschlossen. Der Schweißvorgang erfolgt in der wie vorstehenden beschriebenen Weise beim quasi-stationären Schweißen.

Die Laser-Schweißvorrichtung kann natürlich auch für mobile Anwendungen mit einem mobilen Vakuumsystem genutzt werden. Der Vorteil ist, dass nur auf der vorderen Seite eine Abdeckung des Spaltes benötigt wird, da auf der hinteren Seite schon die Schweißnaht ausgebildet ist, die den Spalt verschließt. Ebenso kann auf der Wurzelseite ein mobiles System verwendet werden, welches dann insbesondere eine Schmelzbadstütze enthält. Dabei bewegt sich eine kleine Vakuumkammer mit dem Schweißprozess mit und erzeugt das Vakuum nur unmittelbar um die Schweißstelle.

In einem solchen Fall weist die Laser-Schweißvorrichtung gemäß einer Ausführungsform eine erste Prozesskammer auf, wie sie weiter oben beschrieben ist. Bei dieser Ausführungsform kann die Lasereinrichtung beispielsweise ortsfest mit der ersten Prozesskammer verbunden sein, beispielsweise, indem das Basiselement der Lasereinrichtung gleichzeitig auch den ersten Prozesskammerabschluss bildet. Weiterhin kann eine zweite Prozesskammer bereitgestellt sein, die beispielsweise wie die hier beschriebene erste Prozesskammer ausgebildet ist. Oder die zweite Prozesskammer ist in der wie weiter oben beschriebenen Weise ausgebildet. Die Abdeckung des Spalts erfolgt beispielsweise mittels einer ersten Spaltabdeckeinrichtung und einer zweiten Spaltabdeckeinrichtung. Zwischen den Werkstücken und den Prozesskammern schirmen geeignete Dichtungseinrichtungen, beispielsweise dynamische Dichtungseinrichtungen, den Schweißprozess von der Atmosphäre ab. Um eine wurzelseitige Verbindung zur Atmosphäre zu verhindern, kann sowohl mit einer Schmelzbadsicherung, als auch mit einer Wurzelschweißung gearbeitet werden.

Damit die erste und/oder zweite und/oder dritte Spaltabdeckeinrichtung ihre Funktion erfüllen kann/können, ist/sind diese gemäß einer Ausführungsform mit einer möglichst geringen Dicke bereitgestellt. Beispielsweise kann/können diese eine Dicke zwischen 0,5mm und 1,5mm aufweisen, insbesondere eine Dicke zwischen 0,8mm und 1mm. Selbstverständlich ist die Erfindung nicht auf bestimmte Dickenwerte beschränkt.

Gemäß einer Ausführungsform ist seitlich von dem Spalt im ersten Prozesskammerabschluss der ersten Prozesskammer wenigstens eine weitere Unterdruckkammer bereitgestellt. Im einfachsten Fall kann an einer oder an jeder Seite des Spalts eine derartige Unterdruckkammer realisiert sein, vorzugsweise jeweils eine. Es können jeweils aber auch zwei oder mehr solcher Unterdruckkammern bereitgestellt sein. Seitliche Vakuumkammern halten das erste Spaltabdeckelement und/oder das dritte Spaltabdeckelement in Position und wandeln die Biege- und Zugbeanspruchung um. Damit kann das Auftreten unerwünschter Leckagen vermieden werden. Die wenigstens eine Unterdruckkammer dient auch dazu, ein Durchwölben der Spaltabdeckelemente zu vermeiden und die entstehenden Biegekräfte in Zugkräfte umzuwandeln.

Gemäß einer Ausführungsform ist in wenigstens einer Unterdruckkammer wenigstens ein Element mit hohem Reibungskoeffizient bereitgestellt. Ein hoher Reibungskoeffizient bedeutet insbesondere, dass es schwierig ist, Materialien in Bewegung zu bringen. Der Reibungskoeffizient bestimmt, wie groß die Reibungskraft im Verhältnis zur Normalkraft ist. Innerhalb der - seitlichen - Unterdruckkammer(n) werden Materialien mit hohem Reibkoeffizienten, beispielsweise Gummipuffer, verbaut, um die durch den Atmosphärendruck entstehende Kraft in eine im Normal dazu stehende Reibkraft umzuwandeln.

Wenn der weiter oben beschriebene, in der ersten Prozesskammer ausgebildete Spalt groß ist, und wenn in der ersten Prozesskammer ein Unterdruck erzeugt wird, kann bei einem Spaltabdeckelement mit geringer Dicke die Situation auftreten, dass das Spaltabdeckelement nach innen in die erste Prozesskammer plastisch gewölbt wird. Um dies zu vermeiden, ist gemäß einer Ausführungsform in dem Spalt wenigstens ein Stützelement angeordnet oder ausgebildet. Das Stützelement dient insbesondere zur Stützung des ersten Spaltabdeckelements und/oder des dritten Spaltabdeckelements. Beispielsweise ist das Stützelement schenkbeweglich im Spalt angeordnet, insbesondere schwenkbeweglich in Richtung der definierten Schweißrichtung. Dies kann beispielsweise mittels einer Federeinrichtung oder einer federnden Einrichtung erfolgen. Die Erfindung ist jedoch nicht auf eine schwenkbewegliche Anordnung beschränkt. Gemäß einer Ausführungsform ist das Stützelement linearbeweglich, gleitbeweglich, oder dergleichen im Spalt bereitgestellt. Wichtig für das Stützelement ist lediglich, dass es in der Lage ist, den Spalt bei Bedarf, das heißt während des Schweißvorgangs so freizugeben, dass der Bearbeitungslaserstrahl nicht behindert wird.

Gemäß einer Ausführungsform ist das Stützelement im Spalt angeordnet. Das heißt, das Stützelement ist ein zunächst eigenständiges Bauteil, welches anschließend an der ersten Prozesskammer, insbesondere im/am ersten Prozesskammerabschluss in dem Spalt befestigt wird. In einem solchen Fall kann das Stützelement über eine schwenkbewegliche Anordnung, etwa einer Federscharniereinrichtung, in dem Spalt bereitgestellt sein. Ist das Stützelement in dem Spalt ausgebildet, ist das Stützelement insbesondere integraler Bestandteil der ersten Prozesskammer, insbesondere des ersten Prozesskammerabschlusses. In diesem Fall ist der Übergang zwischen dem ersten Prozesskammerabschluss und dem Stützelement beispielsweise ein federnder elastischer Übergang. Das Stützelement ist dann insbesondere in Form einer Federlasche bereitgestellt.

Zur Betätigung des Stützelements weist die Lasereinrichtung gemäß einer Ausführungsform ein mit dem Stützelement korrespondierendes Aktuatorelement auf. Das Aktuatorelement kann beispielsweise ein Stift sein, der von dem Basiselement abragt und in Richtung der Schweißzone in die erste Prozesskammer hineinragt. Wenn die Lasereinrichtung in Schweißrichtung bewegt wird, stößt das Aktuatorelement an das Stützelement an und drückt dieses zur Seite. Durch entstehende Rückstellkräfte ist das Stützelement bestrebt, in seine Ausgangsposition zurückzukehren. Wenn das Aktuatorelement das Stützelement passiert hat, kann das Stützelement zurück in seine Ausgangsausrichtung zurückkehren.

Ausreichend ist es, wenn zumindest ein Stützelement bereitgestellt ist. Gemäß einer Ausführungsform sind zwei oder mehr solcher Stützelemente, die beabstandet zueinander, insbesondere in gleichen Abständen, im Spalt bereitgestellt. Die Anzahl der Stützelemente ergibt sich insbesondere im Hinblick auf die Länge der Schweißzone beziehungsweise der zu erzeugenden Schweißnaht. Je länger diese ist, desto mehr Stützelemente kommen bevorzugt zum Einsatz, damit eine wie weiter oben beschriebene plastische Wölbung des wenigstens einen Spaltabdeckelements verhindert wird. Hat die zu erzeugende Schweißnaht beispielsweise eine Länge von 5m, können die Stützelemente beispielsweise in einem Abstand von jeweils zwischen 0,5m und 1m im Spalt bereitgestellt sein.

Nachfolgend werden einige Ausführungsbespiele beschrieben, die das Zusammenwirken der Lasereinrichtung mit der ersten und dritten Spaltabdeckeinrichtung, sowie das Zusammenwirken der zweiten Spaltabdeckeinrichtung mit der zweiten Prozesskammer verdeutlichen.

Gemäß einer Ausführungsform weist die Lasereinrichtung wenigstens ein erstes Umlenkelement auf, welches mit einem ersten Umlenkelement der ersten Spaltabdeckeinrichtung zusammenwirkt. Das erste Spaltabdeckelement ist/wird dann zwischen den Umlenkelementen geführt. Gemäß einer Ausführungsform weist die Lasereinrichtung wenigstens ein zweites Umlenkelement auf, welches mit einem dritten Umlenkelement der dritten Spaltabdeckeinrichtung zusammenwirkt. Das dritte Spaltabdeckelement ist dann zwischen den Umlenkelementen geführt. Gemäß einer Ausführungsform weist die zweite Prozesskammer wenigstens ein Umlenkelement auf, welches mit einem zweiten Umlenkelement der zweiten Spaltabdeckeinrichtung zusammenwirkt. Das zweite Spaltabdeckelement ist dann zwischen den Umlenkelementen geführt. Das Umlenkelement der ersten und/oder zweiten und/oder dritten Spaltabdeckeinrichtung und/oder das Umlenkelement der Lasereinrichtung kann angetrieben oder nicht angetrieben sein. Die Funktion der Umlenkelemente besteht darin, eine erste Ausrichtung der Spaltabdeckelemente in eine dazu unterschiedliche zweite Ausrichtung umzulenken. Bei den Umlenkelementen der ersten und/der zweiten und/oder dritten Spaltabdeckeinrichtung und/oder der Lasereinrichtung und/oder der zweiten Prozesskammer handelt es sich beispielsweise um ein drehbares Umlenkelement, beispielsweise um eine Umlenkrolle oder einen drehbaren Umlenkdorn oder eine Umlenkwalze, oder um eine Umlenkführung. Gemäß einer Ausführungsform handelt es sich bei dem Umlenkelement der ersten und/oder zweiten und/oder dritten Spaltabdeckeinrichtung um ein drehbares Umlenkelement, während es sich bei der ersten und/oder zweiten Umlenkelement der Lasereinrichtung und/oder bei dem Umlenkelement der zweiten Prozesskammer um eine Umlenkführung handelt.

Um unerwünschte Leckagen zwischen den einzelnen Komponenten, insbesondere zwischen den Umlenkelementen, zu vermeiden, ist gemäß einer Ausführungsform zwischen der ersten Spaltabdeckeinrichtung und der Lasereinrichtung eine Dichtungseinrichtung angeordnet oder ausgebildet, und/oder zwischen der dritten Spaltabdeckeinrichtung und der Lasereinrichtung ist eine Dichtungseinrichtung angeordnet oder ausgebildet, und/oder dass zwischen der zweiten Spaltabdeckeinrichtung und der zweiten Prozesskammer eine Dichtungseinrichtung angeordnet oder ausgebildet.

Gemäß einer Ausführungsform ist das erste Spaltabdeckelement als aufrollbares Spaltabdeckelement bereitgestellt, wobei die erste Spaltabdeckeinrichtung ein drehbares, insbesondere angetriebenes, Aufrollelement aufweist, und/oder das zweite Spaltabdeckelement ist als aufrollbares Spaltabdeckelement bereitgestellt, wobei die zweite Spaltabdeckeinrichtung ein drehbares, insbesondere angetriebenes, Aufrollelement aufweist, und/oder das dritte Spaltabdeckelement ist als aufrollbares Spaltabdeckelement bereitgestellt, wobei die dritte Spaltabdeckeinrichtung ein drehbares, insbesondere angetriebenes Aufrollelement aufweist. Die Aufrollelemente können beispielsweise als Aufrolldorn oder Aufrollspule oder Aufrollwalze, insbesondere als Antriebswalze, ausgebildet sein.

Gemäß einer Ausführungsform weist die erste Prozesskammer eine die Schweißzone umgebende erste Dichtungseinrichtung auf, und/oder die zweite Prozesskammer weist eine die Schweißzone umgebende zweite Dichtungseinrichtung auf. Je nach Ausgestaltung der Laser-Schweißvorrichtung ist/sind die erste Dichtungseinrichtung und/oder die zweite Dichtungseinrichtung als statische Dichtungseinrichtung oder als dynamische Dichtungseinrichtung ausgebildet. Eine statische Dichtung wird beispielsweise zwischen zwei unbeweglichen Bauteilen eingesetzt. Eine statische Dichtung ist insbesondere bei stationären oder quasi-stationären Schweißprozessen von Vorteil. Dynamische Dichtungen haben ihren Namen von der Bewegung, der sie ausgesetzt sind. Sie sollen zwischen zwei relativ zueinander bewegenden Bauteilen dichten. Eine dynamische Dichtung ist insbesondere bei mobilen Schweißprozessen von Vorteil.

Gemäß einer Ausführungsform weist die Lasereinrichtung ein Abschirmelement auf. Dieses erstreckt sich von dem Basiselement in Richtung der Schweißzone in die erste Prozesskammer hinein und umgibt den Bearbeitungslaserstrahl. Der Bearbeitungslaserstrahl wird während des Schweißprozesses zumindest teilweise reflektiert. Diese reflektierten Strahlen könnten die Spaltabdeckelemente beschädigen. Durch das Abschirmelement werden die reflektierten Strahlen innerhalb des Abschirmelements hin und her reflektiert und können die Spaltabdeckelemente nicht mehr erreichen.

Gemäß einer Ausführungsform weist die Laser-Schweißvorrichtung eine Einrichtung zur Zufuhr von Schweiß-Zusatzmaterial auf. Der Laserschweißprozess arbeitet in der Regel am technischen Nullspalt, also fehlt Material, um den Spalt auffüllen zu können.

Die Laser-Schweißvorrichtung eignet sich auch für die Erzeugung von Rundnähten. In dem Fall wäre bspw., aber nicht ausschließlich, die Verwendung eines mobilen Teils auf der Laserseite und einer Vakuumschiene auf der Wurzelseite sinnvoll. Das Schweißen könnte dann sowohl in der vertikalen Laserposition, wie in den Figuren dargestellt, aber auch in der horizontalen Laserposition durchgeführt werden.

Gemäß dem zweiten Aspekt wird ein Verfahren zum Laserschweißen von Werkstücken im Unterdruck, insbesondere im Vakuum bereitgestellt, welches die Merkmale des unabhängigen Patentanspruchs 15 aufweist. Das Verfahren wird mittels einer Laser-Schweißvorrichtung gemäß dem ersten Aspekt der Erfindung durchgeführt. Zum Ablauf des Verfahrens und dessen Funktionsweise wird zur Vermeidung von Wiederholungen an dieser Stelle deshalb auch vollinhaltlich auf die Ausführungen zur erfindungsgemäßen Laser-Schweißvorrichtung sowie zur allgemeinen Beschreibung der Erfindung Bezug genommen und verwiesen. Das Verfahren ist durch folgende Schritte gekennzeichnet:
a) Ein mit der Lasereinrichtung erzeugter Bearbeitungslaserstrahl wird in die von der ersten Prozesskammer umgrenzte Schweißzone gerichtet und auf den zu schweißenden Werkstücken in der Schweißzone positioniert.
b) In der ersten Prozesskammer wird ein Unterdruck erzeugt.
c) Ein Spalt zwischen den zu verschweißenden Werkstücken und/oder ein Spalt in der ersten Prozesskammer wird über das erste Spaltabdeckelement der ersten Spaltabdeckeinrichtung abgedeckt, wobei die erste Spaltabdeckeinrichtung, die in Schweißrichtung vor der Lasereinrichtung bereitgestellt ist, mit der Lasereinrichtung zusammenwirkt.
d) Nach Evakuierung der ersten Prozesskammer erfolgt der Laserschweißprozess, indem die Lasereinrichtung relativ zur Schweißzone in einer definierten Schweißrichtung bewegt wird, wobei sich das erste Spaltabdeckelement in seiner Ausrichtung in Bezug auf die Schweißrichtung verändert.

Gemäß einer Ausführungsform des Verfahrens wird der Spalt zwischen den zu verschweißenden Werkstücken und/oder ein Spalt in der ersten Prozesskammer zusätzlich über das dritte Spaltabdeckelement der dritten Spaltabdeckeinrichtung abgedeckt, wobei die dritte Spaltabdeckeinrichtung, die in Schweißrichtung hinter der Lasereinrichtung bereitgestellt ist, mit der Lasereinrichtung zusammenwirkt. Während des Laserschweißprozesses wird die Lasereinrichtung relativ zur Schweißzone in einer definierten Schweißrichtung bewegt, wobei sich das dritte Spaltabdeckelement in seiner Ausrichtung in Bezug auf die Schweißrichtung verändert.

Das Verfahren in den vorbeschriebenen Ausführungsformen kommt insbesondere bei stationären und quasi-stationären Schweißprozessen zum Einsatz.

Bei den vorbeschriebenen Verfahrensvarianten ist es ausreichend, wenn nur eine Prozesskammer, nämlich die erste Prozesskammer bereitgestellt ist.

Gemäß einer Ausführungsform weist die Laser-Schweißvorrichtung noch eine zweite Prozesskammer auf, die in Strahlrichtung des Bearbeitungslaserstrahls hinter der Schweißzone positioniert wird, und die korrespondierend zur Lasereinrichtung relativ zur Schweißzone in der vorgegebenen Schweißrichtung bewegt wird. Unterhalb der Schweißzone wird außerhalb der zweiten Prozesskammer ein Spalt zwischen den Werkstücken über das zweite Spaltabdeckelement der zweiten Spaltabdeckeinrichtung abgedeckt, wobei die zweite Spaltabdeckeinrichtung, die in Schweißrichtung vor der zweiten Prozesskammer bereitgestellt ist und mit der zweiten Prozesskammer zusammenwirkt. Insbesondere nach Evakuierung der zweiten Prozesskammerkammer, wird während des Laserschweißprozesses die zweite Prozesskammer relativ zur Schweißzone in der definierten Schweißrichtung bewegt, wobei sich das erste Spaltabdeckelement in seiner Ausrichtung in Bezug auf die Schweißrichtung verändert.

Diese Verfahrensvariante kommt insbesondere bei mobilen Schweißprozessen zum Einsatz. Eine zweite Prozesskammer kann natürlich auch bei stationären und quasi-stationären Schweißprozessen zum Einsatz kommen.

Die Erfindung wird nachfolgend anhand von Ausführungsbeispielen unter Bezugnahme auf die beiliegenden Zeichnungen in größerem Detail beschrieben. Es zeigen
- Figur 1: eine schematische Ansicht einer Laser-Schweißvorrichtung, wie sie aus der DE 10 2006 034 291 A1 bekannt ist, und von der die vorliegende Erfindung ausgeht;
- Figuren 2 bis 5: verschiedene schematische Ansichten eines ersten Ausführungsbeispiels einer erfindungsgemäßen Laser-Schweißvorrichtung; und
- Figur 6: eine schematische Ansicht eines zweiten Ausführungsbeispiels einer erfindungsgemäßen Laser-Schweißvorrichtung.

In den Figuren ist jeweils eine Laser-Schweißvorrichtung 10 dargestellt, die für das Laserschweißen von Werkstücken im Unterdruck, insbesondere im Vakuum, eingesetzt wird.

Anhand der Figur 1 wird zunächst eine aus der DE 10 2006 034 291 A1 bekannte Laser-Schweißvorrichtung 10 beschrieben, von der die vorliegende Erfindung ausgeht. Bei dieser bekannten Lösung wird das zu bearbeitende Werkstück 90 innerhalb einer nach oben offenen Prozesskammer 100 positioniert. Die Prozesskammer 100 weist ein Prozesskammergehäuse 101 auf, dessen Prozessraum 102 von einer Seitenwand 101a, einem Bodenelement 101b und einem Deckenelement 101c gebildet ist. In dem Deckenelement 101c befindet sich eine Öffnung 101d. Oberhalb des Deckenelements 101c befindet sich ein Deckelelement 103, das größer ist als die Öffnung 101d der Prozesskammer 100 und relativ zu dieser verschoben werden kann. Das Deckelelement 103 kann in Bewegungsrichtung 104, 104a, 104b hin und her verschoben werden. In dem Deckelelement 103 ist eine Durchgangsöffnung 103a ausgebildet, welche mit einer Lasereinrichtung 11 zur Erzeugung von Bearbeitungslaserlicht zusammenwirkt. Die Lasereinrichtung 11 weist eine Laseroptik 12 auf, welche einen Bearbeitungslaserstrahl 13 erzeugt, der durch eine Führungseinrichtung 14 geführt wird. Das Deckelelement 103 kann Bestandteil der Lasereinrichtung 11 sein, oder die Lasereinrichtung 11 ist an dem Deckelement 103 angeordnet. Der erzeugte Bearbeitungslaserstrahl 13 tritt durch die Durchgangsöffnung 103a und die Öffnung 101d im Deckenelement 101c hindurch und trifft auf das in der Schweißzone 17 innerhalb der Prozesskammer100 befindliche Werkstück 90 auf. Um den Bearbeitungslaserstrahl 13 zur Erzeugung einer Schweißnaht über das Werkstück 90 zu führen, wird das Deckelelement 103 mit der daran befindlichen Lasereinrichtung 11 über die Öffnung 101d der Prozesskammer 100 verschoben. Bei der Prozesskammer 100 handelt es sich um eine stationäre Prozesskammer.

Die in Figur 1 dargestellte Laser-Schweißvorrichtung 10 eignet sich beispielsweise nicht für das Schweißen großer Werkstücke. Denn die Werkstücke müssen zur Bearbeitung in ihrer Gänze innerhalb der Prozesskammer 100 positionieret werden. Beim Schweißen großer Werkstücke muss die Prozesskammer 100 deshalb ausreichend groß dimensioniert werden. Dafür ist nicht nur ein hoher Platzbedarf erforderlich. Zudem muss die Prozesskammer 100 während des Schweißvorgangs evakuiert werden und in einem evakuierten Zustand gehalten werden. Die in Figur 1 dargestellte Laser-Schweißvorrichtung 10 hat zudem den Nachteil, dass das Deckelelement 103, welches sich für die geforderte Bewegung 104, 104a,104b weit über das Prozesskammergehäuse 101 hinaus erstrecken müsste, was einen erheblichen Überstand 103 des Deckelelements 103 erfordert, nochmals um einiges größer sein müsste als die Prozesskammer 100. Denn zu jedem Zeitpunkt müsste sichergestellt sein, dass die Prozesskammer 100 über das Deckelelement 103 hermetisch verschlossen ist, egal, an welcher Position sich die Durchgangsöffnung 103a mit der zugeordneten Lasereinrichtung 11 befindet. Der für eine derartige Bearbeitungsvorrichtung erforderliche Platz müsste deshalb unverhältnismäßig groß sein.

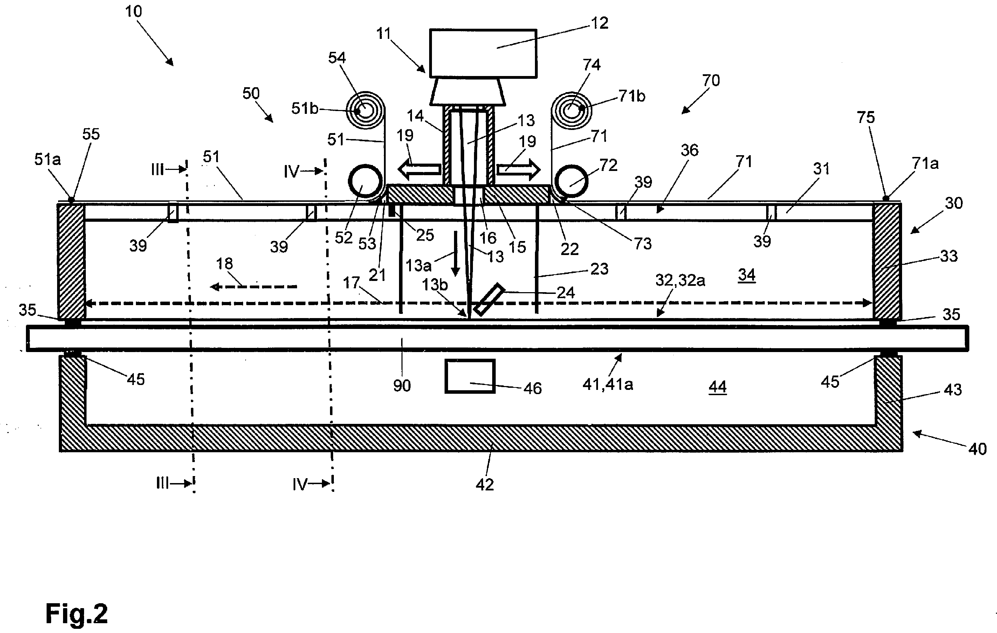

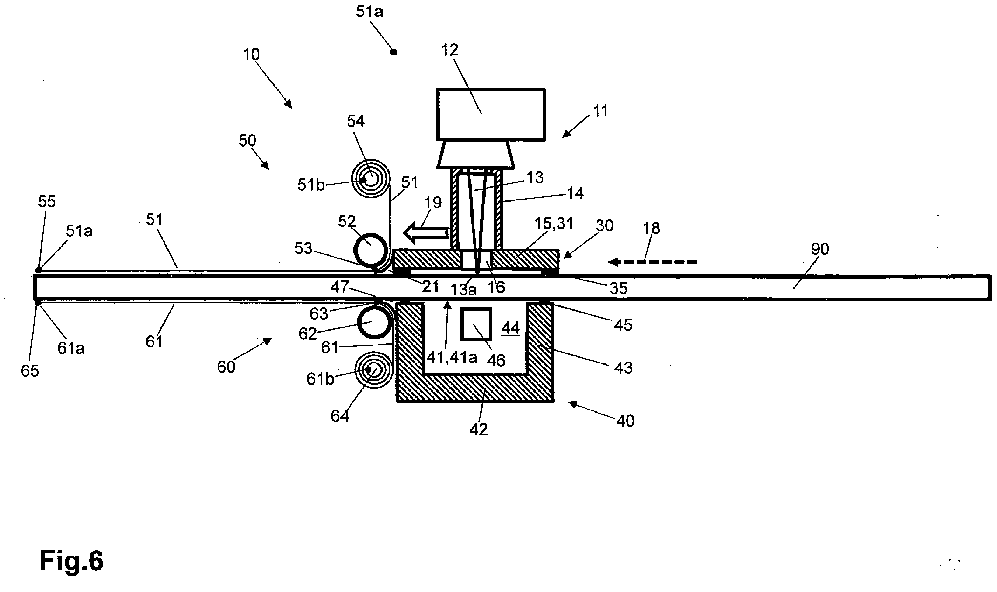

Diese im Zusammenhang mit der bekannten Laser-Schweißvorrichtung 10 beschriebenen Nachteile lassen sich durch die erfindungsgemäße Laser-Schweißvorrichtung 10 beheben, die in den Figuren 2 bis 6 dargestellt ist. Die Figuren 2 bis 5 zeigen verschiedene Ansichten einer ersten Ausführungsform der Laser-Schweißvorrichtung 10, während Figur 6 eine zweite Ausführungsform der erfindungsgemäßen Laser-Schweißvorrichtung 10 zeigt.

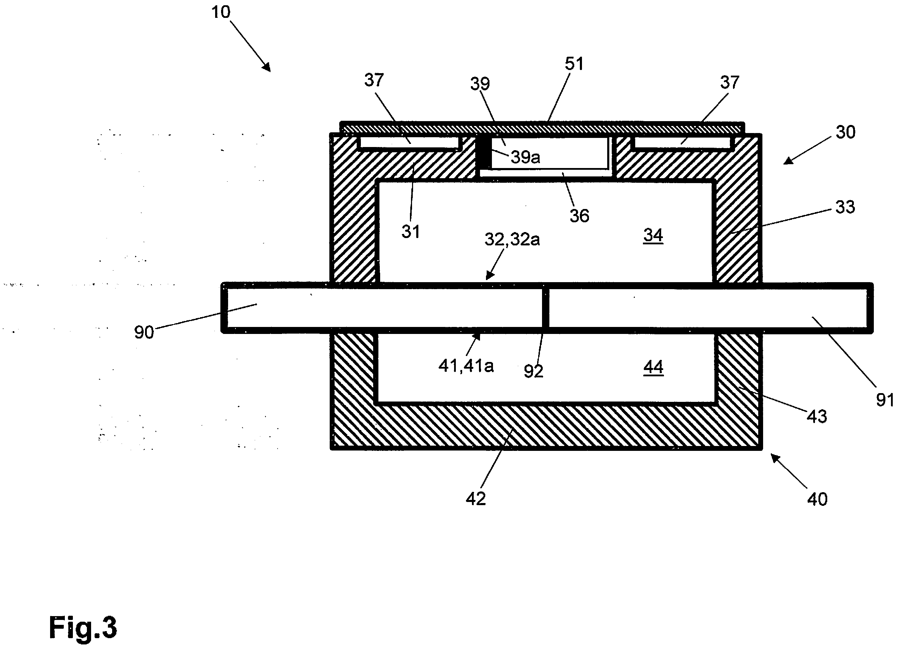

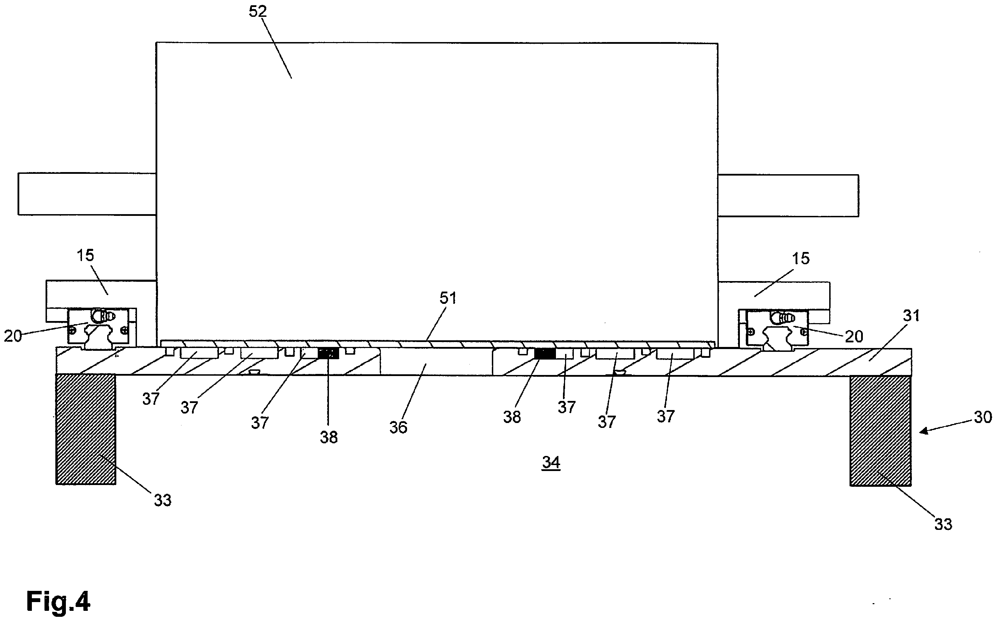

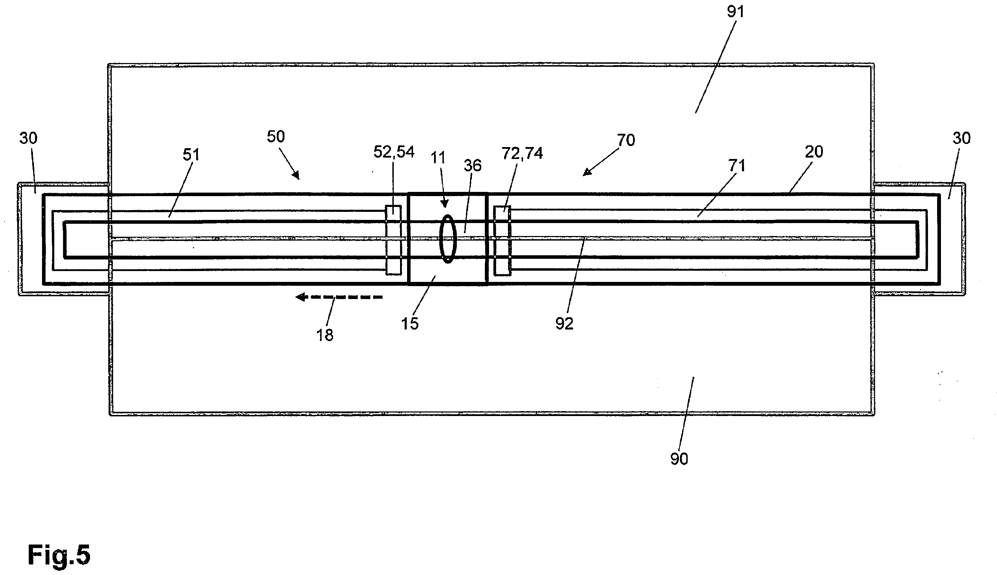

In den Figuren 2 bis 5 ist das erste Ausführungsbeispiel der erfindungsgemäßen Laser-Schweißvorrichtung 10 dargestellt. Figur 2 zeigt eine schematische Prinzipskizze, Figur 3 zeigt eine Schnittansicht entlang der in Figur 2 dargestellten Schnittlinie III-III, Figur 4 zeigt eine Schnittansicht entlang der in Figur 2 dargestellten Schnittlinie IV-IV, und Figur 5 zeigt eine Draufsicht auf die Laser-Schweißvorrichtung 10.

Die Laser-Schweißvorrichtung 10 weist zunächst eine Prozesskammereinrichtung auf, bestehend aus einer ersten Prozesskammer 30 und einer zweiten Prozesskammer 40. Beide Prozesskammern sind Unterdruck-Prozesskammern und über eine nicht dargestellte Evakuierungseinrichtung evakuierbar. Die erste Prozesskammer 30 weist einen ersten, oberen Prozesskammerabschluss 31 auf, in dem ein Spalt 36 ausgebildet ist. Weiterhin weist die erste Prozesskammer 30 einen zweiten, unteren Prozesskammerabschluss 32 auf, in dem sich eine Austrittsöffnung 32a befindet, die sich über die gesamte Fläche des zweiten Prozesskammerabschlusses 32 erstreckt. Die erste Prozesskammer 30 ist somit nach unten offen. Ein dritter, seitlicher Prozesskammerabschluss 33 stellt die Seitenwand der ersten Prozesskammer 30 dar. Die Prozesskammerabschlüsse 31,32,33 begrenzen den evakuierbaren Prozessraum 34. Der zweite Prozesskammerabschluss 32 liegt in der Ebene der Schweißzone 17, in welcher der Schweißprozess durchgeführt wird. In der Schweißzone 17 liegen auch die zu schweißenden Werkstücke 90, 91, zwischen denen sich ein Spalt 92 befindet (Figur 3). Über eine erste Dichtungseinrichtung 35 in Form einer statischen Dichtung ist die erste Prozesskammer 30 gegen Atmosphäre abgedichtet. Die erste Prozesskammer 30 befindet sich oberhalb der Schweißzone 17.

Unterhalb der Schweißzone 17 befindet sich die zweite Prozesskammer 40. Diese weist einen der Schweißzone 17 zugewandten ersten oberen Prozesskammerabschluss 41 mit einer Öffnung 41a, einen zweiten unteren Prozesskammerabschluss 42 und einen seitlichen dritten Prozesskammerabschluss 43 auf. Die Prozesskammerabschlüsse 41,42,43 begrenzen den evakuierbaren Prozessraum 44. Über eine zweite Dichtungseinrichtung 45 in Form einer statischen Dichtung ist die zweite Prozesskammer 40 gegen Atmosphäre abgedichtet. In der zweiten Prozesskammer 40 befindet sich eine Schmelzbadstützeinrichtung 46.

Das für den Schweißvorgang benötigte Bearbeitungslaserlicht wird über eine Lasereinrichtung 11 erzeugt. Die Lasereinrichtung 11 weist eine Laseroptik 12 auf, in der das Laserlicht erzeugt wird. Die Laseroptik 12 weist auch eine Einrichtung zur Strahlformung und/oder Strahlablenkung des erzeugten Bearbeitungslaserstrahls 13 auf. Geführt in Richtung der Schweißzone 17 wird der Bearbeitungslaserstrahl 13 mittels einer Führungseinrichtung 14, wo er in Strahlrichtung 13a mit seinem Fokuspunk 13b auf dem zu schweißenden Werkstück 90 auftrifft.

Zum Einkoppeln des Bearbeitungslaserstrahls 13 in die Schweißzone 17 weist die Lasereinrichtung 11 ein Basiselement 15 in Form einer Basisplatte auf. In dem Basiselement 15 befindet sich eine Durchgangsöffnung 16, durch die der Bearbeitungslaserstrahl 13 hindurchtritt und in die Schweißzone 17 eintritt. Die Lasereinrichtung 11 ist über eine Bewegungseinrichtung 20, die beispielsweise einen Schienensystem umfasst (Figuren 4 und 5), und einem geeigneten Antrieb entlang des Spalts 36 verfahrbar. Durch einen entsprechenden Verfahrweg der Lasereinrichtung 11 kann während des Schweißvorgangs in der Schweißzone 17 eine Schweißnaht in einer definierten Schweißrichtung 18 erzeugt werden. Die Lasereinrichtung 11 wird über die Bewegungseinrichtung 20 in der Verschieberichtung 19 hin und her bewegt. Zur Abschirmung reflektierter Bearbeitungslaserstrahlen 13 weist die Lasereinrichtung 11 ein Abschirmelement 23 auf, welches sich von dem Basiselement 15 in Richtung der Schweißzone 17 in die erste Prozesskammer 30 erstreckt, und welches den Bearbeitungslaserstrahl 13 umgibt. Das Abschirmelement 23 endet kurz oberhalb der Schweißzone 17. Zur Zufuhr von Schweißzusatzmaterial ist eine Einrichtung 24 bereitgestellt, die in Figur 2 allerdings nur ganz schematisch dargestellt ist.

Um Leckagen während des Schweißvorgangs über den Spalt 36 zu vermeiden, wirkt der Spalt 36 mit zwei Spaltabdeckeinrichtungen 50, 70 zusammen. Eine erste Spaltabdeckeinrichtung 50 weist ein sich in seiner Ausrichtung in Bezug auf die Schweißrichtung 18 zumindest teilweise veränderliches erstes Spaltabdeckelement 51 auf. Das erste Spaltabdeckelement 51 ist flexibel und ist beispielsweise als ein biegbares Dünnblech ausgebildet. Bei dem ersten Spaltabdeckelement 51 handelt es sich um ein aufrollbares Element. Das erste Spaltabdeckelement 51 überlappt den Spalt 36 seitlich (Figur 3), so dass dieser auch seitlich abgedeckt ist. Seitlich neben dem Spalt 36 sind im ersten Prozesskammerabschluss 31 der ersten Prozesskammer 30 weitere Unterdruckkammern 37 bereitgestellt. Diese halten das erste Spaltabdeckelement 51 in Position und wandeln die Biege- und Zugbeanspruchung um. Damit kann das Auftreten unerwünschter Leckagen vermieden werden. In einigen Unterdruckkammern 37 ist zusätzlich wenigstens ein Element 38 mit hohem Reibungskoeffizient bereitgestellt, beispielsweise ein Gummipuffer, um die durch den Atmosphärendruck entstehende Kraft in eine im Normal dazu stehende Reibkraft umzuwandeln.

Die erste Spaltabdeckeinrichtung 50 ist mit der Lasereinrichtung 11 gekoppelt, so dass eine Bewegung der Lasereinrichtung 11 auch eine Betätigung der ersten Spaltabdeckeinrichtung aufweist. In Schweißrichtung 18 gesehen ist die erste Spaltabdeckeinrichtung 50 vor der Lasereinrichtung 11 bereitgestellt.

Die erste Spaltabdeckeinrichtung 50 weist ein Aufrollelement 54 in Form einer Aufrollspule auf, an der das erste Spaltabdeckelement 51 mit einem zweiten Ende 51b befestigt ist. Das Aufrollelement 54 kann angetrieben sein. Mit seinem ersten Ende 51a ist das Spaltabdeckelement 51 über eine Befestigungseinrichtung 55 an der ersten Prozesskammer 30, beispielsweise am Rand der ersten Prozesskammerabschlusses 31, befestigt. Die Kopplung der ersten Spaltabdeckeinrichtung 50 und der Lasereinrichtung 11 erfolgt über ein erstes Umlenkelement 52 der ersten Spaltabdeckeinrichtung 50 in Form einer Umlenkrolle, sowie einem ersten Umlenkelement 21 an der Lasereinrichtung 11 in Form einer Umlenkführung. Das erste Spaltabdeckelement 51 ist zwischen den Umlenkelementen 21, 52 hindurchgeführt. Die Funktion der Umlenkelemente 21, 52 besteht darin, eine erste Ausrichtung des ersten Spaltabdeckelements 51 in eine dazu unterschiedliche zweite Ausrichtung umzulenken. Das Auftreten unerwünschter Leckagen wird über eine Dichtungseinrichtung 53 verhindert.

In Schweißrichtung 18 hinter der Lasereinrichtung 11, das heißt der Lasereinrichtung 11 nachgeführt, ist eine dritte Spaltabdeckeinrichtung 70 bereitgestellt. Diese ist so wie die erste Spaltabdeckeinrichtung 50 aufgebaut.

Auch die dritte Spaltabdeckeinrichtung 50 ist mit der Lasereinrichtung 11 gekoppelt, so dass eine Bewegung der Lasereinrichtung 11 auch eine Betätigung der dritten Spaltabdeckeinrichtung 70 bewirkt.

Die dritte Spaltabdeckeinrichtung 70 weist ein Aufrollelement 74 in Form einer Aufrollspule auf, an der das dritte Spaltabdeckelement 71 mit einem zweiten Ende 71b befestigt ist. Das Aufrollelement 74 kann angetrieben sein. Mit seinem ersten Ende 71a ist das Spaltabdeckelement 71 über eine Befestigungseinrichtung 75 an der ersten Prozesskammer 30, beispielsweise am Rand der ersten Prozesskammerabschlusses 31, befestigt. Die Kopplung der dritten Spaltabdeckeinrichtung 70 und der Lasereinrichtung 11 erfolgt über ein drittes Umlenkelement 72 der dritten Spaltabdeckeinrichtung 70 in Form einer Umlenkrolle, sowie einem zweiten Umlenkelement 22 an der Lasereinrichtung 11 in Form einer Umlenkführung. Das dritte Spaltabdeckelement 71 ist zwischen den Umlenkelementen 22, 72 hindurchgeführt. Die Funktion der Umlenkelemente 22, 72 besteht darin, eine erste Ausrichtung des dritten Spaltabdeckelement 71 in eine dazu unterschiedliche zweite Ausrichtung umzulenken. Das Auftreten unerwünschter Leckagen wird über eine Dichtungseinrichtung 73 verhindert.

Zur Durchführung des Schweißvorgangs wird die erste Prozesskammer 30 und die zweite Prozesskammer 40 auf den zu schweißenden Werkstücken 90,91 aufgesetzt. Die erste und zweite Prozesskammer 30,40 umgibt die Schweißzone 17. Dann erfolgt in entsprechender Weise die Schweißung.

Diese Ausführung eignet sich insbesondere für quasi-stationäre Schweißprozesse. Bei einem quasi-stationären Betrieb weist die erste Prozesskammer 30 im zweiten Prozesskammerabschluss 32 eine Austrittsöffnung 32a auf, über die der Bearbeitungslaserstrahl 13 in die Schweißzone 17 eintritt. Die erste Prozesskammer 30 wird auf den zu schweißenden Werkstücken 90,91 aufgesetzt. Die Austrittsöffnung 32a wird durch die zu schweißenden Werkstücke 90,91 verschlossen. Der im ersten Prozesskammerbschluss 31 befindliche Spalt 36 ist durch die ersten und dritten Spaltabdeckelemente 51,71 und das Basiselement 15 der Lasereinrichtung 11 verschlossen. Während des Schweißvorgangs, bei dem die erste Prozesskammer 30 evakuiert ist, kann es somit nicht zu unerwünschten Leckagen kommen. In ähnlicher Weise wird die zweite Prozesskammer 40 von unten auf den Werkstücken 90,91 aufgesetzt. In der Schweißzone wird die Schweißnaht durch Bewegung der Lasereinrichtung 11 und die gekoppelte Betätigung der Spaltabdeckeinrichtungen 50,70 erzeugt. Bewegt sich die Lasereinrichtung 11 in Schweißrichtung 18, wird das erste Spaltabdeckelement 51 der ersten Spaltabdeckeinrichtung 50 aufgerollt, während gleichzeitig das dritte Spaltabdeckelement 71 der dritten Spaltabdeckeinrichtung 70 abgerollt wird. In jedem Fall bleibt der Spalt 36 zu jedem Zeitpunkt des Schweißvorgangs verschlossen.

Um während des Schweißprozesses, bei dem in der ersten Prozesskammer 30 ein Unterdruck erzeugt wird, zu verhindern, dass das erste Spaltabdeckelement 51 und das dritte Spaltabdeckelement 71 nach innen in die erste Prozesskammer 30 plastisch gewölbt werden, sind in dem Spalt 36 eine Anzahl von Stützelementen 39 bereitgestellt, die insbesondere in den Figuren 2 und 3 dargestellt sind. Die Stützelemente 39 dienen zur Stützung des ersten Spaltabdeckelements 51 und des dritten Spaltabdeckelements 71. Die Stützelemente 39 sind bei dieser Ausführungsform im Spalt 36 schwenkbeweglich in Richtung der definierten Schweißrichtung 18 bereitgestellt, und zwar über eine schwenkbewegliche Anordnung 39a. Hierbei kann es sich beispielsweise um eine Federeinrichtung handeln. Sie können natürlich auch in anderer Weise bereitgestellt sein.

Zur Betätigung der Stützelemente 39 weist die Lasereinrichtung 11 ein Aktuatorelement 25 in Form eine Stifts auf, der von dem Basiselement 15 abragt und in Richtung der Schweißzone 17 in die erste Prozesskammer 30 hineinragt. Wenn die Lasereinrichtung 11 in Schweißrichtung 18 bewegt wird, stößt das Aktuatorelement 25 an die Stützelemente 39 an und drückt diese zur Seite. Durch entstehende Rückstellkräfte sind die Stützelemente 39 bestrebt, in ihre Ausgangsposition zurückzukehren. Wenn das Aktuatorelement 25 ein Stützelement 39 passiert hat, kann das Stützelement 39 zurück in seine Ausgangsausrichtung zurückkehren.

Die Laser-Schweißvorrichtung kann natürlich auch für mobile Anwendungen mit einem mobilen Vakuumsystem genutzt werden. Der Vorteil ist, dass nur auf der vorderen Seite eine Abdeckung des Spaltes benötigt wird, da auf der hinteren Seite schon die Schweißnaht ausgebildet ist, die den Spalt verschließt. Eine solche Laser-Schweißvorrichtung 10 ist in Figur 6 dargestellt.

Die Laser-Schweißvorrichtung 10 weist zunächst eine Prozesskammereinrichtung auf, bestehend aus einer ersten Prozesskammer 30 und einer zweiten Prozesskammer 40. Beide Prozesskammern sind Unterdruck-Prozesskammern und über eine nicht dargestellte Evakuierungseinrichtung evakuierbar.

Die erste Prozesskammer 30 weist einen ersten, oberen Prozesskammerabschluss 31 auf, der gleichzeitig auch die Basisplatte 15 der Lasereinrichtung 11 bildet. Lasereinrichtung 11 und erste Prozesskammer 30 sind somit ortsfest miteinander verbunden und gegeneinander nicht beweglich. Weiterhin weist die erste Prozesskammer 30, wie bei Figur 2, einen zweiten, unteren Prozesskammerabschluss auf, in dem sich eine Austrittsöffnung befindet, die sich über die gesamte Fläche des zweiten Prozesskammerabschlusses erstreckt. Die erste Prozesskammer 30 ist somit nach unten offen. Ein dritter, seitlicher Prozesskammerabschluss stellt die Seitenwand der ersten Prozesskammer 30 dar. Um die erste Prozesskammer 30 klein zu halten, besteht der dritte Prozesskammerabschluss allein aus der ersten Dichtungseinrichtung 35 in Form einer dynamischen Dichtung. Die Prozesskammerabschlüsse 31,32,33 begrenzen den evakuierbaren Prozessraum. Der zweite Prozesskammerabschluss liegt wie bei Figur 2 in der Ebene der Schweißzone, in welcher der Schweißprozess durchgeführt wird. In der Schweißzone liegen auch die zu schweißenden Werkstücke 90. Die erste Prozesskammer 30 befindet sich oberhalb der Schweißzone.

Unterhalb der Schweißzone befindet sich die zweite Prozesskammer 40. Diese weist, wie bei Figur 2, einen der Schweißzone zugewandten ersten oberen Prozesskammerabschluss 41 mit einer Öffnung 41a, einen zweiten unteren Prozesskammerabschluss 42 und einen seitlichen dritten Prozesskammerabschluss 43 auf. Die Prozesskammerabschlüsse 41,42,43 begrenzen den evakuierbaren Prozessraum 44. Über eine zweite Dichtungseinrichtung 45 in Form einer dynamischen Dichtung ist die zweite Prozesskammer 40 gegen Atmosphäre abgedichtet. In der zweiten Prozesskammer 40 befindet sich eine Schmelzbadstützeinrichtung 46.

Das für den Schweißvorgang benötigte Bearbeitungslaserlicht wird auch hier über eine Lasereinrichtung 11 erzeugt. Die Lasereinrichtung 11 weist eine Laseroptik 12 auf, in der das Laserlicht erzeugt wird. Die Laseroptik 12 weist auch eine Einrichtung zur Strahlformung und/oder Strahlablenkung des erzeugten Bearbeitungslaserstrahls 13 auf. Geführt in Richtung der Schweißzone, wie bei Figur 2, wird der Bearbeitungslaserstrahl 13 mittels einer Führungseinrichtung 14, wo er in Strahlrichtung 13a mit seinem Fokuspunk 13b auf dem zu schweißenden Werkstück 90 auftrifft.

Zum Einkoppeln des Bearbeitungslaserstrahls 13 in die Schweißzone 17 weist die Lasereinrichtung 11 ein Basiselement 15 in Form einer Basisplatte auf. In dem Basiselement 15 befindet sich eine Durchgangsöffnung 16, durch die der Bearbeitungslaserstrahl 13 hindurchtritt und in die Schweißzone eintritt. Das Basiselement 25 ist gleichzeitig der erste Prozesskammerabschluss 31 der ersten Prozesskammer 30.

In Schweißrichtung 18 vor der Laser-Schweißvorrichtung 10, das heißt in Bewegungsrichtung 19 vor der Lasereinrichtung 11, weisen die zu schweißenden Werkstücke in der Regel einen Spalt auf, der zur Vermeidung von Leckagen verschlossen werden muss. In Schweißrichtung 18, das heißt in Bewegungsrichtung 19 hinter der Lasereinrichtung 11 ist der Spalt aufgrund der erzeugten Schweißnaht bereits verschlossen.

Um Leckagen während des Schweißvorgangs zu vermeiden, wirkt der Spalt zwischen den Werkstücken mit zwei Spaltabdeckeinrichtungen 50,60 zusammen. Eine erste Spaltabdeckeinrichtung 50 weist, wie bei Figur 2, ein sich in seiner Ausrichtung in Bezug auf die Schweißrichtung 18 zumindest teilweise veränderliches erstes Spaltabdeckelement 51 auf. Das erste Spaltabdeckelement 51 ist flexibel und ist beispielsweise als ein biegbares Dünnblech ausgebildet. Bei dem ersten Spaltabdeckelement 51 handelt es sich um ein aufrollbares Element. Das erste Spaltabdeckelement 51 überlappt den Spalt zwischen den Werkstücken seitlich. Die erste Spaltabdeckeinrichtung 50 ist mit der Lasereinrichtung 11 gekoppelt, so dass eine Bewegung der Lasereinrichtung 11 auch eine Betätigung der ersten Spaltabdeckeinrichtung aufweist. In Schweißrichtung 18 gesehen ist die erste Spaltabdeckeinrichtung 50 vor der Lasereinrichtung 11 bereitgestellt.

Die erste Spaltabdeckeinrichtung 50 weist ein Aufrollelement 54 in Form einer Aufrollspule auf, an der das erste Spaltabdeckelement 51 mit einem zweiten Ende 51b befestigt ist. Das Aufrollelement 54 kann angetrieben sein. Mit seinem ersten Ende 51a ist das Spaltabdeckelement 51 über eine Befestigungseinrichtung 55, insbesondere lösbar, etwa über eine Magnetverbindung, am Ende des Werkstücks 90 befestigt. Die Kopplung der ersten Spaltabdeckeinrichtung 50 und der Lasereinrichtung 11 erfolgt über ein erstes Umlenkelement 52 der ersten Spaltabdeckeinrichtung 50 in Form einer Umlenkrolle, sowie einem ersten Umlenkelement 21 an der Lasereinrichtung 11 in Form einer Umlenkführung. Das erste Spaltabdeckelement 51 ist zwischen den Umlenkelementen 21, 52 hindurchgeführt. Die Funktion der Umlenkelemente 21, 52 besteht darin, eine erste Ausrichtung des ersten Spaltabdeckelements 51 in eine dazu unterschiedliche zweite Ausrichtung umzulenken. Das Auftreten unerwünschter Leckagen wird über eine Dichtungseinrichtung 53 verhindert.

Unterhalb der Werkstücke 90 ist die zweite Spaltabdeckeinrichtung 60 bereitgestellt, welche mit der zweiten Prozesskammer 40 zusammenwirkt. Die dritte Spaltabdeckeinrichtung 60 ist mit der zweiten Prozesskammer 40 gekoppelt, so dass eine Bewegung der zweiten Prozesskammer 40 in Bewegungsrichtung 19, das heißt in Schweißrichtung 18, auch eine Betätigung der zweiten Spaltabdeckeinrichtung 60 aufweist. In Schweißrichtung 18 gesehen ist die zweite Spaltabdeckeinrichtung 60 vor der zweiten Prozesskammer 40 bereitgestellt.

Die zweite Spaltabdeckeinrichtung 60 weist ein Aufrollelement 64 in Form einer Aufrollspule auf, an der das zweite Spaltabdeckelement 61 mit einem zweiten Ende 61b befestigt ist. Das Aufrollelement 64 kann angetrieben sein. Mit seinem ersten Ende 61a ist das Spaltabdeckelement 61 über eine Befestigungseinrichtung 65, insbesondere lösbar, etwa über eine Magnetverbindung, am Ende des Werkstücks 90 befestigt. Die Kopplung der zweiten Spaltabdeckeinrichtung 60 und der zweiten Prozesskammer 40 erfolgt über ein zweites Umlenkelement 62 der zweiten Spaltabdeckeinrichtung 60 in Form einer Umlenkrolle, sowie einem Umlenkelement 47 an der zweiten Prozesskammer 40 in Form einer Umlenkführung. Das zweite Spaltabdeckelement 61 ist zwischen den Umlenkelementen 47, 62 hindurchgeführt. Die Funktion der Umlenkelemente 47, 62 besteht darin, eine erste Ausrichtung des zweiten Spaltabdeckelements 61 in eine dazu unterschiedliche zweite Ausrichtung umzulenken. Das Auftreten unerwünschter Leckagen wird über eine Dichtungseinrichtung 63 verhindert.

Zur Durchführung des Schweißvorgangs wird die erste Prozesskammer 30 und die zweite Prozesskammer 40 auf den zu schweißenden Werkstücken 90,91 aufgesetzt. Die erste und zweite Prozesskammer 30,40 umgibt die Schweißzone. Dann erfolgt in entsprechender Weise die Schweißung.

Diese Ausführung eignet sich insbesondere für mobile Schweißprozesse. Bei einem mobilen Betrieb weist die erste Prozesskammer 30 im zweiten Prozesskammerabschluss eine Austrittsöffnung auf, über die der Bearbeitungslaserstrahl 13 in die Schweißzone eintritt. Die erste Prozesskammer 30 wird auf den zu schweißenden Werkstücken 90,91 aufgesetzt. Die Austrittsöffnung wird durch die zu schweißenden Werkstücke 90,91 verschlossen. In ähnlicher Weise wird die zweite Prozesskammer 40 von unten auf den Werkstücken 90,91 aufgesetzt. In der Schweißzone wird die Schweißnaht durch Bewegung der Prozesskammern 30,40 und die gekoppelte Betätigung der Spaltabdeckeinrichtungen 50,60 erzeugt. Bewegt sich die Lasereinrichtung 11 in Schweißrichtung 18, werden das erste Spaltabdeckelement 51 der ersten Spaltabdeckeinrichtung 50 und das zweite Spaltabdeckelement 61 der zweiten Spaltabdeckeinrichtung 60 aufgerollt. In jedem Fall bleibt der Spalt zwischen den Werkstücken vor den Prozesskammern 30,40 zu jedem Zeitpunkt des Schweißvorgangs verschlossen. Die Prozesskammern 30,40 werden kontinuierlich entlang der Schweißrichtung 18 über die Werkstücke geführt.

### Bezugszeichenliste

- 10: Laser-Schweißvorrichtung
- 11: Lasereinrichtung zur Erzeugung eines Bearbeitungs-Laserstrahls
- 12: Laseroptik
- 13: Bearbeitungslaserstrahl
- 13a: Strahlrichtung des Bearbeitungslaserstrahls
- 13b: Fokuspunkt des Bearbeitungslaserstrahls
- 14: Führungseirichtung
- 15: Basiselement
- 16: Durchgangsöffnung
- 17: Schweißzone
- 18: Definierte Schweißrichtung
- 19: Verschieberichtung
- 20: Bewegungseinrichtung für die Lasereinrichtung
- 21: Erstes Umlenkelement der Lasereinrichtung
- 22: Zweites Umlenkelement der Lasereinrichtung
- 23: Abschirmelement
- 24: Einrichtung zur Zufuhr von Schweiß-Zusatzmaterial
- 25: Aktuatorelement für das Stützelement
- 30: Erste Prozesskammer
- 31: Erster Prozesskammerabschluss
- 32: Zweiter Prozesskammerabschluss
- 32a: Austrittsöffnung
- 33: Dritter Prozesskammerabschluss
- 34: Prozessraum
- 35: Erste Dichtungseinrichtung
- 36: Spalt
- 37: Unterdruckkammer
- 38: Element mit hohem Reibungskoeffizienten
- 39: Stützelement (für das erste und/oder dritte Spaltabdeckelement)
- 39a: Schwenkbewegliche Anordnung des Stützelements
- 40: Zweite Prozesskammer
- 41: Erster Prozesskammerabschluss
- 41a: Öffnung
- 42: Zweiter Prozesskammerabschluss
- 43: Dritter Prozesskammerabschluss
- 44: Prozessraum
- 45: Zweite Dichtungseinrichtung
- 46: Schmelzbadstützeinrichtung
- 47: Umlenkelement der zweiten Prozesskammer
- 50: Erste Spaltabdeckeinrichtung
- 51: Erstes Spaltabdeckelement
- 51a: Erstes Ende
- 51b: Zweites Ende
- 52: Erstes Umlenkelement
- 53: Dichtungseinrichtung
- 54: Aufrollelement
- 55: Befestigungseinrichtung
- 60: Zweite Spaltabdeckeinrichtung
- 61: Zweites Spaltabdeckelement
- 61a: Erstes Ende
- 61b: Zweites Ende
- 62: Zweites Umlenkelement
- 63: Dichtungseinrichtung
- 64: Aufrollelement
- 65: Befestigungseinrichtung
- 70: Dritte Spaltabdeckeinrichtung
- 71: Drittes Spaltabdeckelement
- 71a: Erstes Ende
- 71b: Zweites Ende
- 72: Drittes Umlenkelement
- 73: Dichtungseinrichtung
- 74: Aufrollelement
- 75: Befestigungseinrichtung
- 90: Werkstück
- 91: Werkstück
- 92: Spalt zwischen den Werkstücken
- 100: Prozesskammer
- 101: Prozesskammergehäuse
- 101a: Seitenwand
- 101b: Bodenelement
- 101c: Deckenelement
- 101d: Öffnung im Deckenelement
- 102: Prozessraum
- 103: Deckelelement
- 103a: Durchgangsöffnung
- 103b: Überstand des Deckelelements
- 104: Bewegungsrichtung des Deckelelements
- 104a: Erste Bewegungsrichtung
- 104b: Zweite Bewegungsrichtung

## Patentansprüche

1. Laser-Schweißvorrichtung (10), welche für das Schweißen von Werkstücken (90,91) im Unterdruck, vorzugsweise im Vakuum, bereitgestellt ist, mit einer Lasereinrichtung (11), welche konfiguriert ist zur Erzeugung und Einkopplung eines Bearbeitungslaserstrahls (13) in eine Schweißzone (17) der Laser-Schweißvorrichtung (10), mit einer ersten Prozesskammer (30), die in Strahlrichtung (13a) des Bearbeitungslaserstrahls (13) insbesondere vor der Schweißzone (17) bereitgestellt ist, aufweisend einen ersten, der Lasereinrichtung (11) zugewandten Prozesskammerabschluss (31), einen zweiten, der Schweißzone (17) zugewandten Prozesskammerabschluss (32), in dem insbesondere eine Austrittsöffnung (32a) für den Bearbeitungslaserstrahl (13) in die Schweißzone (17) ausgebildet ist, sowie einen sich zwischen dem ersten (31) und zweiten (32) Prozesskammerabschluss erstreckenden seitlichen dritten Prozesskammerabschluss (33), wobei die Lasereinrichtung (11) relativ zur Schweißzone (17) in einer definierten Schweißrichtung (18) beweglich ist, **dadurch gekennzeichnet,**
**dass** wenigstens eine erste Spaltabdeckeinrichtung (50) bereitgestellt ist, welche konfiguriert ist zum Abdecken eines Spalts (92) zwischen den zu verschweißenden Werkstücken (90,91) und/oder eines Spalts (36) in der ersten Prozesskammer (30), dass die erste Spaltabdeckeinrichtung (50) oberhalb der Schweißzone (17) bereitgestellt ist, dass die erste Spaltabdeckeinrichtung (50) ein sich in seiner Ausrichtung in Bezug auf die Schweißrichtung (18) zumindest teilweise veränderliches erstes Spaltabdeckelement (51) aufweist, dass die erste Spaltabdeckeinrichtung (50) mit der Lasereinrichtung (11) und/oder der ersten Prozesskammer (30) zusammenwirkt und dass die erste Spaltabdeckeinrichtung (50) in Schweißrichtung (18) vor der Lasereinrichtung (11) oder vor der ersten Prozesskammer (30) bereitgestellt ist.

2. Laser-Schweißvorrichtung nach Anspruch 1, **gekennzeichnet durch** eine zweite Prozesskammer (40), die in Strahlrichtung (13a) des Bearbeitungslaserstrahls (13) hinter der Schweißzone (17) bereitgestellt ist, aufweisend einen mit einer Öffnung (41a) versehenen ersten, der Schweißzone (17) zugewandten Prozesskammerabschluss (41), einen zweiten, der Schweißzone (17) abgewandten Prozesskammerabschluss (42), sowie einen sich zwischen dem ersten (41) und zweiten (42) Prozesskammerabschluss erstreckenden seitlichen dritten Prozesskammerabschluss (43), wobei die zweite Prozesskammer (40) optional relativ zur Schweißzone (17) in der definierten Schweißrichtung (18) beweglich ist.

3. Laser-Schweißvorrichtung nach Anspruch 1 oder 2, **dadurch gekennzeichnet, dass** die erste Prozesskammer (30) in Richtung der Schweißzone (17) offen ist, und/oder dass die zweite Prozesskammer (40) in Richtung der Schweißzone (17) offen ist.

4. Laser-Schweißvorrichtung nach Anspruch 2 oder 3, **dadurch gekennzeichnet, dass** in der zweiten Prozesskammer (40) wenigsten eine Schmelzbadstützeinrichtung (46) bereitgestellt ist.

5. Laser-Schweißvorrichtung nach einem der Ansprüche 2 bis 4, **dadurch gekennzeichnet, dass** wenigstens eine zweite Spaltabdeckeinrichtung (60) bereitgestellt ist, welche konfiguriert ist zum Abdecken eines Spalts (92) zwischen den zu verschweißenden Werkstücken (90,91), dass die zweite Spaltabdeckeinrichtung (60) unterhalb der Schweißzone (17) bereitgestellt ist, dass die zweite Spaltabdeckeinrichtung (60) ein sich in seiner Ausrichtung in Bezug auf die Schweißrichtung (18) veränderliches zweites Spaltabdeckelement (61) aufweist, dass die zweite Spaltabdeckeinrichtung (60) mit der zweiten Prozesskammer (40 zusammenwirkt und dass die zweite Spaltabdeckeinrichtung (60) in Schweißrichtung (18) vor der zweiten Prozesskammer (40) bereitgestellt ist.

6. Laser-Schweißvorrichtung nach einem der Ansprüche 1 bis 5, **dadurch gekennzeichnet, dass** wenigstens eine dritte Spaltabdeckeinrichtung (70) bereitgestellt ist, welche konfiguriert ist zum Abdecken eines Spalts (92) zwischen den zu verschweißenden Werkstücken (90,91) und/oder eines Spalts (36) in der ersten Prozesskammer (30), dass die dritte Spaltabdeckeinrichtung (70) oberhalb der Schweißzone (17) bereitgestellt ist, dass die dritte Spaltabdeckeinrichtung (70) ein sich in seiner Ausrichtung in Bezug auf die Schweißrichtung (18) veränderliches drittes Spaltabdeckelement (71) aufweist, dass die dritte Spaltabdeckeinrichtung (70) mit der Lasereinrichtung (11) zusammenwirkt und dass die dritte Spaltabdeckeinrichtung (70) in Schweißrichtung (18) hinter der Lasereinrichtung (18) bereitgestellt ist.

7. Laser-Schweißvorrichtung nach einem der Ansprüche 1 bis 6, **dadurch gekennzeichnet, dass** in dem ersten Prozesskammerabschluss (31) der ersten Prozesskammer (30) ein, insbesondere zu der Schweißzone (17) korrespondierender, Spalt (36) ausgebildet ist, dass die Lasereinrichtung (11) mittels einer Bewegungseinrichtung (20) entlang des Spalts (36) beweglich ist, und dass das erste Spaltabdeckelement (51) der ersten Spaltabdeckeinrichtung (50) und optional das dritte Spaltabdeckelement (71) der dritten Spaltabdeckeinrichtung (70) zur Abdeckung des Spalts (36) bereitgestellt ist/sind.

8. Laser-Schweißvorrichtung nach Anspruch 7, **dadurch gekennzeichnet, dass** seitlich von dem Spalt (36) im ersten Prozesskammerabschluss (31) der ersten Prozesskammer (30) wenigstens eine Unterdruckkammer (37) bereitgestellt ist.

9. Laser-Schweißvorrichtung nach einem der Ansprüche 7 oder 8, **dadurch gekennzeichnet, dass** in dem Spalt (36) wenigstens ein Stützelement (39), insbesondere für das erste Spaltabdeckelement (51) und/oder das dritte Spaltabdeckelement (71), angeordnet oder ausgebildet ist.

10. Laser-Schweißvorrichtung nach einem der Ansprüche 1 bis 9, **dadurch gekennzeichnet, dass** das erste Spaltabdeckelement (51) und/oder das zweite Spaltabdeckelement (61) und/oder das dritte Spaltabdeckelement (71) aus einem flexiblen Material bereitgestellt ist/sind, und/oder dass das erste Spaltabdeckelement (51) und/oder das zweite Spaltabdeckelement (61) und/oder das dritte Spaltabdeckelement (71) als faltbares Spaltabdeckelement bereitgestellt ist/sind, und/oder dass das erste Spaltabdeckelement (51) und/oder das zweite Spaltabdeckelement (61) und/oder das dritte Spaltabdeckelement (71) als aufrollbares Spaltabdeckelement bereitgestellt ist/sind.

11. Laser-Schweißvorrichtung nach einem der Ansprüche 1 bis 10, **dadurch gekennzeichnet, dass** die Betätigung der ersten Spaltabdeckeinrichtung (50) und die Bewegung der Lasereinrichtung (11) gekoppelt sind, und/oder dass die Betätigung der zweiten Spaltabdeckeinrichtung (60) und die Bewegung der zweiten Prozesskammer (40) gekoppelt sind, und/oder dass die Betätigung der dritten Spaltabdeckeinrichtung (70) und die Bewegung der Lasereinrichtung (11) gekoppelt sind.

12. Laser-Schweißvorrichtung nach einem der Ansprüche 1 bis 11, **dadurch gekennzeichnet, dass** zwischen der ersten Spaltabdeckeinrichtung (50) und der Lasereinrichtung (11) eine Dichtungseinrichtung (53) angeordnet oder ausgebildet ist, und/oder dass zwischen der dritten Spaltabdeckeinrichtung (70) und der Lasereinrichtung (11) eine Dichtungseinrichtung (73) angeordnet oder ausgebildet ist, und/oder dass zwischen der zweiten Spaltabdeckeinrichtung (60) und der zweiten Prozesskammer (40) eine Dichtungseinrichtung (63) angeordnet oder ausgebildet ist.

13. Laser-Schweißvorrichtung nach einem der Ansprüche 1 bis 12, **dadurch gekennzeichnet, dass** das erste Spaltabdeckelement (51) als aufrollbares Spaltabdeckelement (51) bereitgestellt ist, und dass die erste Spaltabdeckeinrichtung (50) ein drehbares Aufrollelement (54) aufweist, und/oder dass das zweite Spaltabdeckelement (61) als aufrollbares Spaltabdeckelement (61) bereitgestellt ist, und dass die zweite Spaltabdeckeinrichtung (60) ein drehbares Aufrollelement (64) aufweist, und/oder dass das dritte Spaltabdeckelement (71) als aufrollbares Spaltabdeckelement (71) bereitgestellt ist, und dass die dritte Spaltabdeckeinrichtung (70) ein drehbares Aufrollelement (74) aufweist.

14. Laser-Schweißvorrichtung nach einem der Ansprüche 1 bis 13, **dadurch gekennzeichnet, dass** die erste Prozesskammer (30) eine die Schweißzone (17) umgebende erste Dichtungseinrichtung (35) aufweist, und/oder dass die zweite Prozesskammer (40) eine die Schweißzone (17) umgebende zweite Dichtungseinrichtung (45) aufweist, und dass die erste Dichtungseinrichtung (35) und/oder die zweite Dichtungseinrichtung (45) als statische Dichtungseinrichtung oder als dynamische Dichtungseinrichtung ausgebildet ist/sind.

15. Verfahren zum Laserschweißen von Werkstücken (90,91) im Unterdruck, vorzugsweise im Vakuum, mittels einer Laser-Schweißvorrichtung (10) nach einem der Ansprüche 1 bis 14, **gekennzeichnet durch** folgende Schritte:
a) Ein mit der Lasereinrichtung (11) erzeugter Bearbeitungslaserstrahl (13) wird in die von der ersten Prozesskammer (30) umgrenzte Schweißzone (17) gerichtet und auf den zu schweißenden Werkstücken (90,91) in der Schweißzone (127) positioniert;
b) In der ersten Prozesskammer (30) wird ein Unterdruck erzeugt;
c) Ein Spalt (92) zwischen den zu verschweißenden Werkstücken (90,91) und/oder ein Spalt (36) in der ersten Prozesskammer (30) wird über das erste Spaltabdeckelement (51) der ersten Spaltabdeckeinrichtung (50) abgedeckt, wobei die erste Spaltabdeckeinrichtung (50), die in Schweißrichtung (18) vor der Lasereinrichtung (11) bereitgestellt ist, mit der Lasereinrichtung (11) zusammenwirkt;
d) Nach Evakuierung der ersten Prozesskammer (30) erfolgt der Laserschweißprozess, indem die Lasereinrichtung (11) relativ zur Schweißzone (17) in einer definierten Schweißrichtung (18) bewegt wird, wobei sich das erste Spaltabdeckelement (51) in seiner Ausrichtung in Bezug auf die Schweißrichtung (18) verändert.
